(19) **Europäisches Patentamt / European Patent Office / Office européen des brevets**

(11) **EP 2 592 769 B1**

(12) **EUROPEAN PATENT SPECIFICATION**

(45) Date of publication and mention of the grant of the patent:
**06.03.2019 Bulletin 2019/10**

(21) Application number: **11816048.0**

(22) Date of filing: **23.06.2011**

(51) Int Cl.:
*H04B 17/00* (2015.01) *H04W 72/08* (2009.01)
*H04W 52/38* (2009.01) *H04B 17/318* (2015.01)
*H04W 28/18* (2009.01) *H04W 72/12* (2009.01)
*H04B 17/327* (2015.01) *H04B 17/382* (2015.01)
*H04W 24/10* (2009.01) *H04W 52/24* (2009.01)
*H04W 52/36* (2009.01) *H04W 92/20* (2009.01)
*H04L 5/00* (2006.01)

(86) International application number:
**PCT/CN2011/076218**

(87) International publication number:
**WO 2012/019489 (16.02.2012 Gazette 2012/07)**

(54) **METHOD, DEVICE AND SYSTEM FOR RADIO FREQUENCY DETECTION**

VERFAHREN, VORRICHTUNG UND SYSTEM ZUR FUNKFREQUENZERKENNUNG

PROCÉDÉ, DISPOSITIF, ET SYSTÈME POUR UNE DÉTECTION DE RADIOFRÉQUENCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2010 CN 201010255852**

(43) Date of publication of application:
**15.05.2013 Bulletin 2013/20**

(73) Proprietor: **ZTE Corporation**
**Shenzhen, Guangdong 518057 (CN)**

(72) Inventors:
• **DIAO, Xinxi**
  **Shenzhen**
  **Guangdong 518057 (CN)**
• **ZHU, Xiaodong**
  **Shenzhen**
  **Guangdong 518057 (CN)**
• **LAI, Zhengrong**
  **Shenzhen**
  **Guangdong 518057 (CN)**
• **ZHANG, Senlin**
  **Shenzhen**
  **Guangdong 518057 (CN)**
• **YANG, Guang**
  **Shenzhen**
  **Guangdong 518057 (CN)**

• **MA, Zhifeng**
  **Shenzhen**
  **Guangdong 518057 (CN)**
• **ZHANG, Li**
  **Shenzhen**
  **Guangdong 518057 (CN)**
• **YUE, Tianheng**
  **Shenzhen**
  **Guangdong 518057 (CN)**

(74) Representative: **Ilgart, Jean-Christophe et al**
**BREVALEX**
**95, rue d'Amsterdam**
**75378 Paris Cedex 8 (FR)**

(56) References cited:
**WO-A2-2009/064582     CN-A- 1 706 141**
**CN-A- 101 005 324     US-A1- 2008 075 059**
**US-A1- 2009 197 590**

• **ALCATEL-LUCENT: "Blank Subframes for LTE", 3GPP DRAFT; R1-093340, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090824, 24 August 2009 (2009-08-24), XP050388121, [retrieved on 2009-08-29]**

- ERICSSON ET AL: "Views on CSI RS Muting", 3GPP DRAFT; R1-103843_VIEWS_ON_CSI_RS_MUTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628 - 20100702, 22 June 2010 (2010-06-22), XP050598483, [retrieved on 2010-06-22]

- PHILIPS: "On the impact of antenna gain imbalance and correlation on MS RX diversity performance", 3GPP DRAFT; GP-052332_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Atlanta; 20051107, 7 November 2005 (2005-11-07), XP050015048, [retrieved on 2005-11-07]

## Description

## TECHNICAL FIELD

The disclosure relates to the technical field of radio communication, and more particularly to a method, device and system for radio frequency detection.

## BACKGROUND

When a communication channel is deployed dynamically by an idle frequency band or different communication systems are deployed in way of adjacent frequencies within the same geographical area, a common problem needs to be solved: inhibition of adjacent channel interference. The simplest method to control the adjacent channel interference is to reserve sufficient guard frequency bands between adjacent frequency bands. However, this method has relatively low frequency spectrum utilization rate. In order to utilize frequency spectrums efficiently, a radio communication system needs to identify available idle frequency bands automatically and configure parameters including the width of a guard band, transmission power and the like self-adaptively, while implementation of such abilities needs to learn a radio environment in real time. Learning the radio environment in real time is required to detect and evaluate a power spectrum distribution on a specific frequency band and the performance of a radio frequency device on a specific frequency band. Related technologies of measurement methods and devices for radio frequency detection or radio environment learning are described as follows:

a patent application entitled "System and method for searching frequency band information", whose Chinese patent application number is CN200610011235.6, discloses the following technical contents: a given frequency band information system may include several frequency band measurement devices, several frequency band information searching and management devices, several radio communication base stations (or access points), several base station controllers and several terminals. The method for searching frequency band information includes four basic steps: Step 1: the frequency band information searching and management devices search frequency band prior information from different networks; Step 2: the frequency band information searching and management devices start frequency band information measurement; Step 3: the frequency band information searching and management devices search frequency band measurement information; and Step 4: the frequency band information searching and management devices analyze and obtain overall frequency band information. The technical solution of this disclosure may reduce power consumption, time cost and complexity overhead of frequency band information searching of the terminals, and can further realize multi-frequency band communication guidance, so that a network side is able to know use conditions and idle conditions of frequency bands in a specific area, so as to help the terminals to rapidly select appropriate operating frequency bands.

Measurement of the frequency band measurement devices includes the following basic contents: 1) measurement for operating frequency bands, including measurement of idle time slots in the operating frequency bands to know which time slots are in an idle state in operating frequency bands of a specific system, and measurement of idle time periods to know which time periods are idle in the operating frequency bands of the specific system, such as frequency bands used by digital television broadcasting may change in a day, these data are taken as the basis for the system to guide the terminals to accurately select available frequency bands and obtain required services, as well as use frequency spectrums flexibly and monitor a frequency spectrum environment; 2) measurement of idle frequency bands, including acknowledgement and measurement of idle frequency bands and interference measurement in the idle frequency bands, these data are taken as the basis for the system to use frequency spectrums flexibly and monitor the frequency spectrum environment; 3) measurement of a parameter of an inter-frequency band signal, such as a Time Difference of Arrival (TDOA) of a specific signal within a specific frequency band and a signal of a specific base station, the parameter helps a terminal accessed to the specific base station to capture signals needed by the terminal quickly, and synchronous relationships among base station downlink time slots of base stations of different operators under a Time-Division Duplexing (TDD) mode, especially synchronous relationships (i.e., the TDOA of transmitting signals between two transmitting antennas) among downlink time slots of base stations (TDD base stations or TDD/Frequency Division Duplexing (FDD) hybrid duplex base stations) of different operators in the case of a common station address; and 4) measurement for type of service, such as measuring current broadcasting information and broadcasting service content on each broadcasting frequency band and obtaining data including channels, program content, signal quality and the like of broadcasting services in real time. Specific measurement items are searched according to frequency band information and sent to a measurement device by a management device.

A patent application entitled "Method and apparatus for reducing the guard band between radio communication systems operating in the same geographical area", whose American patent application number is US20080075059A1, discloses the following technical contents: the following method is adopted to reduce the guard band between a first radio communication system and a second radio communication system operating in the same geographical area: a first radio access point in the first communication system sends beacon signals; a second radio access point in the second radio communication system scans within a frequency band of the second radio communication system; interference of the first radio access point to the second radio access point is examined; and the second radio access point is operated if the interference from the first access point does not exceed an acceptable threshold. Further, the beacon signals are sent on a designated frequency band and are scanned on a second frequency band adjacent to the designated frequency band. The patent application provides a terminal, or a radio node, or a radio device, which includes: one or more signal preparation modules configured to prepare transmitting signals for a first radio system; one or more providing modules located in the first radio system, configured to provide signals prepared to be transmitted; one or more transmitting modules configured to transmit the signals; one or more receiving modules arranged within the first and second radio communication systems; one or more detection modules configured to detect interference of the first radio communication system to the second radio communication system; and one or more working modules configured to enable the second radio system to operate when the interference of the first radio communication system to the second radio communication system does not exceed the acceptable threshold.

Said one or more preparation modules are configured to prepare radio beacons; said one or more detection modules further include one or more coupling loss modules configured to calculate coupling loss between the first radio communication system and the second radio communication system; and said one or more detection modules further include one or more interference calculation modules configured to calculate interference of the first system to the second system.

The first and second radio systems are operated by the same operator and located in the same geographic area, and work on adjacent frequency bands. By scanning adjacent frequency bands or beacon signals periodically, signal strength and coupling loss are evaluated according to signal transmitting power of terminals or nodes in the first and second radio communication systems. According to the calculation result, the radio communication systems are adjusted as follows: (a) if the interference is lower than the acceptable threshold, then the radio communication systems work normally; (b) if the interference is higher than the acceptable threshold, then the radio communication systems adjust the transmitting power and an antenna radiation pattern to reduce the interference to below the acceptable threshold; (c) or both the two radio communication systems reduce the transmitting power.

Technical solutions disclosed by patent applications including Chinese patent applications numbered CN200610011235.6 and CN200610152441.9 and American patent application numbered US20080075059A1 have the following disadvantages: a method for measuring an out-of-band leak power and an actual transmitting power of a transmitting channel, which is required to avoid interference between a new channel and an existing channel and implement Built In Test (BIT) for locating a device faulture, is not provided. The method for avoiding adjacent channel interference needs to calculate path loss, is complicated to implement and is difficult to control interference among channels accurately.

US 2009/0197590 A1 discloses techniques for transmitting data with short-term interference mitigation in a wireless communication system. In one design, a serving base station may send a message to a terminal to trigger short-term interference mitigation. In response, the terminal may send a message to request at least one interfering base station to reduce interference on at least one resource. Each interfering base station may determine a transmit power level to be used for the at least one resource and may send a pilot at this transmit power level. The terminal may estimate the channel quality of the at least one resource based on at least one pilot received from the at least one interfering base station. The terminal may send information indicative of the estimated channel quality to the serving Base station. The serving base station may send a data transmission on the at least one resource to the terminal.

WO 2009/064582 A2 discloses systems and methodologies that facilitate blanking on portions of bandwidth utilized by communicating devices that are dominantly interfered by a disparate device in wireless communications networks. The portions of bandwidth can relate to critical data, such as control data, and one or more of the communicating devices can request that the dominantly interfering device blank on one or more of the portions. The communicating devices can subsequently transmit data over the blanked portions free of the dominant interference. Additionally, the dominantly interfering device can request reciprocal blanking from the one or more communicating devices.

SUMMARY

In view of the above, the main purpose of the disclosure is to provide a method, device and system for radio frequency power detection, so as to realize measurement on an out-of-band leak power and an actual transmitting power of a transmitting channel. In order to achieve the purpose above, the technical solution of the disclosure is realized as follows.

A method for radio frequency power detection is proposed, which includes:

a radio frequency detection control unit determines parameters of a detection window according to radio frequency power detection items;

the radio frequency power detection items may include one or more of the following radio frequency power detection items:

measurement of a signal power on an adjacent channel;

measurement of an idle time slot on an adjacent channel;

measurement of an out-of-band leak power for a signal on an adjacent channel;

measurement of an out-of-band leak power for a transmitting channel; and

measurement of a maximum transmitting power for a transmitting channel;

the ratio frequency detection control unit determines parameters of a reduced power window of the transmitting channel interfering with the detection window according to the parameters of the detection window;

the radio frequency detection control unit transmits a reduced power window request to a scheduler unit to which the transmitting channel interfering with the detection window belongs;

the scheduler unit transmits acknowledgement information of the reduced power window request to the radio frequency detection control unit; and

the radio frequency detection control unit determines, according to the acknowledgement information of the reduced power window request fed back by the scheduler unit, whether the reduced power window request is confirmed; if the reduced power window request is confirmed, the radio frequency detection control unit determines parameters of a newly-opened detection window according to the parameters of the reduced power window fed back by the scheduler unit, and controls a radio frequency detection execution unit to complete corresponding radio frequency power detection items in the newly-opened detection window, wherein the newly-opened detection window is on the adjacent channel of the transmitting channel or on the adjacent channel and the transmitting channel; otherwise, the radio frequency detection control unit stops execution of the radio frequency power detection items.

Preferably, the parameters of the detection window may include: a size of the detection window, a candidate configuration range of the detection window and an acquisition mode of radio frequency data; and a method for determining the parameters of the detection window may include: the size of the detection window is determined according to a two-dimensional scale of time and frequencies needed to be covered for performing radio frequency sample data acquisition once on the radio frequency power detection items; the candidate configuration range of the detection window is determined according to a location set of the detection window which is able to obtain equivalent radio frequency sample data;

and the acquisition method of the radio frequency data is one of two following modes: measurement completed by performing the radio frequency sample data acquisition once and measurement completed by performing the radio frequency sample data acquisition for multiple times.

Preferably, the determining the parameters of the reduced power window of the transmitting channel interfering with the detection window by the ratio frequency detection control unit according to the parameters of the detection window may include: determination of the size of the reduced power window, determination of the candidate configuration range of the reduced power window, and determination for an opening mode of the reduced power window;

a method for determining the size of the reduced power window may include: a time interval covered by the reduced power window is determined as being determined to be equal to or greater than a time interval covered by the detection window; and a width of a sub-frequency band, which is located on a frequency band occupied by the transmitting channel and of which transmitting power generates an interference strength being greater than a predetermined threshold within the detection window, is determined as a frequency domain width of the reduced power window, i.e., the size of the reduced power window;

a method for determining the candidate configuration range of the reduced power window may include: a time interval in the candidate configuration range of the detection window is taken as a candidate time range of the reduced power window; and a change range allowed by a frequency scale of the reduced power window is taken as the candidate frequency range of the reduced power window, i.e., the candidate configuration range of the reduced power window; and

a method for determining the opening mode of the reduced power window may include: for a mode of performing the radio frequency sample data acquisition once, the reduced power window is opened once only on a frequency band where the transmitting channel locates in a measurement event; and for a mode of performing the radio frequency sample data acquisition for multiple times, the reduced power window is opened for multiple times on a frequency band where the transmitting channel locates in a measurement event.

Preferably, the transmitting the reduced power window request to the scheduler unit to which the transmitting channel interfering with the detection window belongs may include:

the radio frequency detection control unit transmits, through an uplink radio channel of a radio terminal to which the radio frequency detection control unit belongs, the reduced power window request to the scheduler unit to which the transmitting channel interfering with the detection window belongs, or the radio frequency detection control unit transmits the reduced power window request through a network side channel between the radio frequency detection control unit and the scheduler unit to which the transmitting channel interfering with the detection window belongs; and

the reduced power window request carries the parameter information of the reduced power window, which specifically include: a time scale and a frequency scale of the reduced power window, a location and a candidate configuration range of the reduced power window, and an opening mode or an appearance mode of the reduced power window.

Preferably, the reduced power window request may further carry priority information, and the priority information is configured to indicate that: the scheduler unit is forced to open the reduced power window on the transmitting channel; or the scheduler unit determines whether to open the reduced power window on the transmitting channel according to current service conditions.

Preferably, according to difference of the priority information, that the scheduler unit transmits the acknowledgement information of the reduced power window request to the radio frequency detection control unit may include:

when the priority information indicates that the scheduler unit is forced to open the reduced power window on the transmitting channel, the scheduler unit opens the reduced power window on the transmitting channel controlled by the scheduler unit according to the information included in the reduced power window request, and the scheduler unit transmits the acknowledgement information of the reduced power window request to the radio frequency detection control unit;

when the priority information indicates that the scheduler unit determines whether to open the reduced power window on the transmitting channel according to the current service conditions, the scheduler unit determines, according to a reduced power window scale and a candidate configuration range included in the reduced power window request, whether there are resources which satisfy a requirement in idle time frequency resources owned by the transmitting channel controlled by the scheduler unit or unavailable time frequency resources, when there are no resources which satisfy the requirement, the scheduler unit determines whether to reduce data transmission rate of some users or interrupt data transmission of some users for a short time to provide resources needed by the reduced power window; and when the resources needed by the reduced power window satisfy the requirement, the scheduler unit transmits the acknowledgement information of the reduced power window to the radio frequency detection control unit; otherwise, the scheduler unit transmits information of refusing to open the reduced power window.

Preferably, when the scheduler unit at a network side opens, according to the reduced power window request of the radio frequency detection control unit at a terminal side, the reduced power window on an adjacent channel of an uplink channel for the radio frequency detection execution unit, uplink resources may be not configured for a terminal to which the radio frequency detection control unit belongs within a time interval and a frequency interval in which the reduced power window appears; and uplink resources may be not configured on a first idle frequency band for other terminals controlled by the scheduler unit within the time interval and the frequency interval in which the reduced power window appears; and

the scheduler unit may transmit the acknowledgement information of the reduced power window to the radio frequency detection control unit through a receiving channel of a transceiver unit, and the radio frequency detection control unit may control, according to the acknowledgement information of the reduced power window from the scheduler, the radio frequency detection execution unit to complete designated radio frequency power detection items in the corresponding detection window.

Based on the method for radio frequency detection proposed by the disclosure, the disclosure further proposes a method for determining a maximum transmitting power of a transmitting channel in real time, and the method includes:

a measurement window of a leak power of the transmitting channel on the adjacent channel is determined on the adjacent channel of the transmitting channel according to the radio frequency power detection method proposed by the disclosure, the leak power $P(acl)$ of the transmitting channel on the adjacent channel is measured, and a transmitting power $P(t)$ of the transmitting channel is obtained when the leak power is generated on the adjacent channel;

a ratio $K$ of an interference power $P(noise)$ allowed by the adjacent channel to the leak power $P(acl)$ of the transmitting channel on the adjacent channel is calculated; and

a product of the transmitting power $P(t)$ of the transmitting channel and the ratio $K$ is determined as the maximum transmitting power of the transmitting channel.

The disclosure further proposes a device for radio frequency power detection which is configured to realize the method for radio frequency power detection proposed by the disclosure. The device includes an antenna unit and further includes:

a radio frequency detection control unit configured to: determine parameters of a detection window according to radio frequency power detection items, the radio frequency power detection items may include one or more of the following radio frequency power detection items:

measurement of a signal power on an adjacent channel;

measurement of an idle time slot on an adjacent channel;

measurement of an out-of-band leak power for a signal on an adjacent channel;

measurement of an out-of-band leak power for a transmitting channel; and

measurement of a maximum transmitting power for a transmitting channel;

determine parameters of a reduced power window of a transmitting channel interfering with the detection window according to the parameters of the detection window; and transmit a reduced power window request to a transceiver unit;

the transceiver unit is configured to control generation of the reduced power window on the transmitting channel of the transceiver unit according to the request of a radio frequency detection control unit;

the radio frequency detection control unit (400) is further configured to: determine parameters of a newly-opened detection window according to the parameters of the reduced power window in acknowledgement information of the reduced power window request; and control a radio frequency detection execution unit;

the radio frequency detection execution unit is configured to, under control of the radio frequency detection control unit, complete radio frequency power detection of the corresponding radio frequency power detection items within the newly-opened detection window on the adjacent channel of the transmitting channel controlled by the transceiver unit or the adjacent channel and the transmitting channel; and

an interface unit configured to data transmission between the transceiver unit and a network side and measurement control and measurement data transmission between the radio frequency detection control unit as well as the radio frequency detection execution unit and the network side

Preferably, the device may further include: a scheduler unit located in the transceiver unit or at the network side and configured to: receive the reduced power window request sent by the radio frequency detection control unit, determine the parameters of the reduced power window according to the parameters of the detection window provided by the radio detection control unit and transmit the acknowledgement information of the reduced power window to the radio frequency detection control unit; wherein the acknowledgement information of the reduced power window includes the parameters of the reduced power window.

Preferably, the radio frequency detection execution unit may include:

an adjustable band-pass filter configured to perform band-pass filtering on radio frequency detection signals received from the antenna unit under control of the radio frequency detection control unit;

a radio frequency power attenuator/coupler configured to perform, under control of the radio frequency detection control unit, radio frequency signal power attenuation on the radio frequency detection signals outputted by the adjustable band-pass filter; wherein the attenuated radio frequency signals are inputted into a receiving channel processing unit;

the receiving channel processing unit configured to perform, under control of the radio frequency detection control unit, low noise amplification and frequency conversion processing on the radio frequency signals on a transmitting channel and/or an adjacent channel of a transmitting channel;

a parameter estimation and signal demodulation unit configured to perform, under control of the radio frequency detection control unit, parameter estimation and/or signal demodulation on signals from the receiving channel processing unit; and

a measurement data storage unit configured to store a measurement result of the parameter estimation and signal demodulation unit.

Based on the device for radio frequency power detection proposed by the disclosure, the disclosure further proposes a system for radio frequency power detection and the system includes:

a radio access point and a radio terminal realized based on the device for radio frequency power detection proposed by the disclosure;

an adjacent frequency band measurement management unit located at the network side and configured to perform management on the radio frequency power detection items which need to be executed by the radio frequency detection execution unit in the radio access point and/or the radio frequency detection execution unit in the radio terminal; specific contents of the management include one or more of the followings:

transmitting prior information of the adjacent channel of the transmitting channel of the radio access point and/or the radio terminal to the radio frequency detection control unit of the radio access point and/or the radio terminal;

transmitting detection item trigger information to the radio frequency detection control unit of the radio access point and/or the radio terminal; and

receiving a measurement result from the radio frequency detection control unit of the radio access point and/or the radio terminal.

In respect of the method for radio frequency power measurement, the disclosure realizes to flexibly open a zero-power transmitting window by using the capability of a scheduler unit of an existing system for dynamically managing time-frequency resources to match requirements of a measurement window on a transmitting channel controlled by the scheduler unit. In respect of the measurement device, the disclosure provides a structure of a communication device including a radio frequency detection unit, wherein the characteristics of the structure is that a scheduler unit and a measurement unit have a transmission channel for transmitting measurement window information and/or zero-power transmitting window information, and by means of the method for opening a zero-power transmitting window according to the disclosure, the radio frequency detection unit not only can realize power measurement and/or information demodulation of an existing radio channel signal on an adjacent channel of a local transmitting channel, but also can realize online measurement of an out-of-band leak power and/or an transmitting power of a local transmitter. The measurement result may be applied to one or more of the following purposes: 1) determination of an idle time slot existing on the adjacent channel of the local transmitting channel; 2) determination of a guard frequency bandwidth between a radio channel on an idle frequency band and an existing radio channel adjacent to the radio channel; and 3) implementation of Built In Test (BIT, which is used for equipment failure location). In respect of the system, the disclosure provides a system which includes a device with a radio frequency detection unit according to the disclosure and an adjacent frequency band/adjacent channel measurement management unit, and by means of the method of the disclosure, the system can self-adaptively determine the width of a guard frequency band between its work channel and an adjacent channel performing transmission by using a different station address.

## BRIEF DESCRIPTION OF THE DRAWINGS

Fig. 1 shows a flowchart illustrating a method for radio frequency detection proposed by the disclosure;

Fig. 2a to Fig. 2c show schematic diagrams illustrating a measurement window and a reduced power window;

Fig. 3a to Fig. 3b show structural diagrams illustrating a device for radio frequency detection proposed by the disclosure;

Fig. 4 shows a structural diagram illustrating a radio frequency detection execution unit according to the disclosure;

Fig. 5 shows a structural diagram illustrating a radio frequency detection system supporting adjacent channel radio frequency detection according to the disclosure;

Fig. 6a to Fig. 6b show schematic diagrams illustrating a radio fixed access system capable of configuring transmitting channel parameters thereof based on a state of an adjacent channel according to the disclosure; and

Fig. 7 shows a schematic diagram illustrating determination of a guard bandwidth according to a relative strength of a leak power and a signal power on an adjacent channel according to the disclosure.

## DETAILED DESCRIPTION

To make the purpose, technical solution and advantages of the disclosure more clear, the disclosure will be further described in detail according to embodiments and with conference to the accompanying drawings hereinafter.

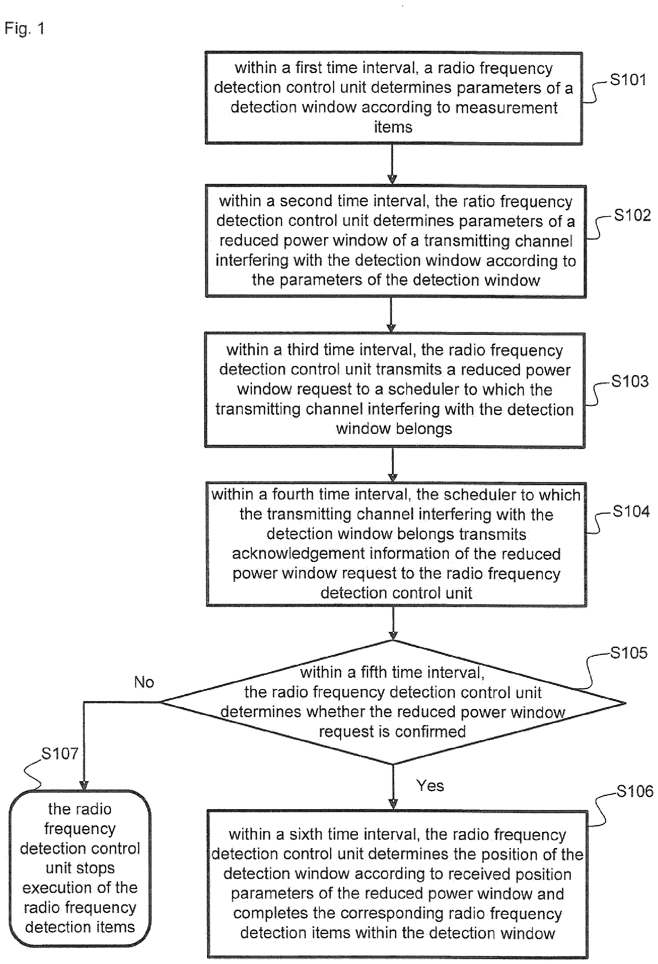

Fig. 1 shows a flowchart illustrating a method for performing radio frequency detection in the case that there is interference within a detection window proposed by the disclosure. The detection method is used to eliminate co-frequency and/or adjacent frequency interference within the detection window, so as to improve the accuracy of radio frequency detection. The method includes the following steps:

Step S101: within a first time interval, a radio frequency detection control unit determines parameters of a detection window according to measurement items.

The radio frequency detection control unit in the radio frequency detection device according to the disclosure determines the parameters of the detection window according to radio frequency detection items which need to be executed, wherein the radio frequency detection items which need to be executed are a combination of several items or one of the following items:

1) radio frequency signal power measurement performed on a channel in which adjacent frequency or co-frequency interference exists, or signal power spectrum measurement;

2) out-of-band leak power measurement performed on a channel in which adjacent frequency or co-frequency interference exists, or out-of-band leak power spectrum measurement;

3) parameter estimation performed on a channel in which adjacent frequency or co-frequency interference exists, including parameters of one or more signals existing on a channel; and

4) signal demodulation or decoding performed on a channel in which adjacent frequency or co-frequency interference exists;

a specific method for the radio frequency detection control unit to determine the parameters of the detection window according to the radio frequency detection items which need to be executed includes:

Step A1: the radio frequency detection control unit determines a size and a candidate configuration range of the detection window.
A specific method for the radio frequency detection unit to determine the size of the detection window includes: a two-dimensional scale of time and frequencies needed to be covered for performing radio frequency sample data acquisition once is determined according to the detection items, and the two-dimensional scale of the time and the frequencies needed to be covered for performing the radio frequency sample data acquisition once is the detection window described by the disclosure. Preferably, the candidate configuration range of the detection window is determined, which is a range in which a specific time of the detection window and/or a value of a frequency location of the detection window can be adjusted; wherein detection results obtained by configuring the detection window at any specific locations within the candidate range are the same.
The two-dimensional scale of the detection window specifically includes a frequency bandwidth covered by the detection window and an time length of appearance of the detection window; the candidate configuration range of the detection window refers to that: since a location of the measurement window required to satisfy specific measurement items is not unique and the measurement window may appear within a range, the specific location of the detection window is determined by a location of time frequency resource which may be given away by a transmitting channel; here, the giving away the time frequency resource refers to that the transmitting channel configures a reduced power window at a specific location and on a specific time frequency interval.
Step A2: the radio frequency detection control unit determines a radio frequency data acquisition mode adopted for completing the detection items, that is, one of the following radio frequency sample data acquisition modes is determined:

1) measurement completed by performing the radio frequency sample data acquisition once;
2) measurement completed by performing the radio frequency sample data acquisition for multiple times;

The radio frequency sample data acquisition mode determines a mode for configuring the reduced power window by the scheduler to which the transmitting channel belongs.

The parameters of the detection window include: a size of the detection window and a candidate configuration range of the detection window, and radio frequency data acquisition modes corresponding to the detection items; after the parameters of the detection window are determined according to the steps above, Step S102 is executed.

Step S102: within a second time interval, the ratio frequency detection control unit determines parameters of a reduced power window of a transmitting channel interfering with the detection window according to the parameters of the detection window.

The transmitting channel performs reducing power transmission on time frequency resources within the reduced power window according to one of the following methods:

1) transmission performed on all time frequency resource blocks within the reduced power window by zero power;

2) transmission performed on all time frequency resource blocks within the reduced power window by a power which is below a preset threshold; a reducing power transmitting mode is: time frequency resource blocks which needs to be transmitted by a reduced power are distributed to a terminal whose distance from a transmitter is less than a preset distance threshold; and

3) transmission is performed by zero power on the first part of the time frequency resource blocks within the reduced power window; and reducing power transmission is performed on a second part of the time frequency resource blocks in the reduced power window.

A specific method for the radio frequency detection control unit to determine the parameters of the reduced power window of the transmitting channel interfering with the detection window according to the parameters of the detection window includes determination of the size of the reduced power window and determination of the candidate configuration range of the reduced power window, and the specific implementation steps of the method are as follows:

Step B1: the radio frequency detection control unit determines the size of the reduced power window and the candidate configuration range of the reduced power window according to the size of the detection window and the candidate configuration range of the detection window.

Specific implementation of determining the size (including a time scale and a frequency scale) and the candidate configuration range (including a time range and a frequency range) of the reduced power window according to the size of the detection window and the candidate configuration range of the detection window includes:

a method for determining the time scale of the reduced power window includes: a time interval covered by the reduced power window is determined to be equal to or greater than a time interval covered by the detection window;

a method for determining the frequency scale of the reduced power window includes: a width of a sub-frequency band, which is located on a frequency band occupied by the transmitting channel and of which transmitting power generates a interference strength being greater than a predetermined threshold within the detection window, is determined to be a frequency domain width of the reduced power window; the size of the frequency domain width of the reduced power window changes with the change of the frequency scale in the candidate configuration range of the detection window;

a method for determining the time range of the candidate configuration range of the reduced power window includes: a time interval in the candidate configuration range of the detection window is taken as a candidate time range of the reduced power window;

a method for determining the frequency range of the candidate configuration range of the reduced power window includes: a change range allowed by the frequency scale of the reduced power window is taken as a candidate frequency range of the reduced power window;

Step B2: the radio frequency detection control unit determines an opening mode of the reduced power window according to the radio frequency data acquisition mode.

Specifically, the reduced power window is opened according to one of the following methods;

1) for detection which may be completed by performing the radio frequency sample data acquisition once, the reduced power window is opened once on a frequency band on which the transmitting channel is located in a measurement event;

2) for detection which may be completed by performing the radio frequency sample data acquisition for multiple times, the reduced power window is opened for multiple times on a frequency band on which the transmitting channel is located in a measurement event, e.g., a reduced power window is opened in a radio frame period and the reduced power window is opened periodically or non-periodically on multiple radio frames;

after the parameters of the reduced power window are determined according to the steps above, Step S103 is executed.

Step S103: within a third time interval, the radio frequency detection control unit transmits a reduced power window request to a scheduler to which the transmitting channel interfering with the detection window belongs.

The radio frequency detection control unit transmits the reduced power window request to the scheduler to which the transmitting channel interfering with the detection window belongs according to one of the following methods:

1) the radio frequency detection control unit transmits the reduced power window request to the scheduler to which the transmitting channel interfering with the detection window belongs via an uplink radio channel of a radio terminal to which a radio frequency detection device including the radio frequency detection control unit belongs; the uplink channel is one of the followings: an uplink scheduling request channel, and an uplink random access channel; and

2) the radio frequency detection control unit transmits the reducing window request via a network side channel between the radio frequency detection control unit and the scheduler unit to which the transmitting channel interfering with the detection window belongs.

The reducing window request carries parameter information of the reduced power window, which specifically includes:

1) the time scale and the frequency scale of the reduced power window, i.e., the size of the reduced power window;

2) the location or the candidate configuration range of the reduced power window; and

3) an opening mode or an appearance mode of the reduced power window.

Preferably, the reduced power window request further carries priority information, and the priority information includes one of the following information:

1) the scheduler unit is forced to open the reduced power window on the transmitting channel; and

2) the scheduler unit determines whether to open the reduced power window on the transmitting channel according to the current service conditions.

Step S104: within a fourth time interval, the scheduler to which the transmitting channel interfering with the detection window belongs transmits acknowledgement information of the reduced power window request to the radio frequency detection control unit.

When the scheduler to which the transmitting channel interfering with the detection window belongs transmits the acknowledgement information of the reduced power window request to the radio frequency detection control unit, the following two implementation modes are provided according to difference of the priority information:

when the priority information included in a request of opening the reduced power window transmitted by the radio frequency detection control unit indicates that "the scheduler unit is forced to open the reduced power window on the transmitting channel", the scheduler unit opens, after receiving the request, the reduced power window on the transmitting channel controlled by the scheduler unit according to information included in the reduced power window request: the time scale and the frequency scale of the reduced power window, the location and the candidate configuration range of the reduced power window and the appearance mode of the reduced power window, and transmits the acknowledgement information of the reduced power window request to the radio frequency detection control unit. The transmitted acknowledgement information of the reduced power window request is one of the following information:

1) when such determined parameters as the time scale and the frequency scale of the reduced power window, the location of the reduced power window and the appearance mode of the reduced power window are included in the reduced power window request, the acknowledgement information of the reduced power window request includes acknowledgement indication information which indicates that the reduced power window is opened according to the requested reduced power window parameters; and

2) when such determined parameters as the time scale and the frequency scale of the reduced power window and the appearance mode of the reduced power window and such undetermined parameters as the candidate location range of the reduced power window are included in the information of the reduced power window request, the acknowledgement information of the reduced power window request further includes a location parameter of a specific reduced power window formulated by the scheduler unit; and

when the priority information included in a request of opening the reduced power window transmitted by the radio frequency detection control unit indicates that "the scheduler unit determines whether to open the reduced power window on the transmitting channel according to the current service conditions", specific implementation of the scheduler unit includes the following sub-steps:

Step C1: the scheduler to which the transmitting channel interfering with the detection window belongs determines according to a scale and a candidate configuration of the reduced power window included in the information of the reduced power window request received by the scheduler:

1) whether there are resources satisfying a requirement in idle time frequency resources owned by the transmitting channel controlled by the scheduler unit;

2) whether there are resources satisfying the requirement in the unavailable time frequency resources owned by the transmitting channel controlled by the scheduler unit; an example of the unavailable time frequency resource is: a time frequency resource on which all terminals served by the transmitting channel are in deep fading;

the satisfying a requirement refers to that: the idle resources of the transmitting channel contain a time frequency resource block included by a zero power-transmitting window within a candidate time frequency location range of requested time frequency resources.
If the idle resources satisfy the requirement, Step C3 is executed; otherwise, Step C2 is executed.

Step C2: the scheduler unit determines whether the resources needed to be occupied by the reduced power window can be provided by reducing data transmission speed of some users or interrupting data transmission of some users for a short time, if yes, Step C3 is executed; otherwise, information of refusing to open the reduced power window is transmitted to the radio frequency detection control unit.

Step C3: the scheduler unit transmits acknowledgement information of the reduced power window to the radio frequency detection control unit, wherein the acknowledgement information includes at least the following parameters: 1) a specific time frequency location of the reduced power window opened on the transmitting channel; and 2) an initial appearance time of the reduced power window on the transmitting channel.

Step S105: within a fifth time interval, the radio frequency detection control unit determines, according to the acknowledgement information of the reduced power window request transmitted by the scheduler unit to the radio frequency detection control unit, whether the reduced power window request is confirmed, if yes, Step S106 is executed; otherwise, Step S107 is executed.

Step S106: within a sixth time interval, the radio frequency detection control unit determines, according to the parameters of the reduced power window transmitted by the scheduler unit, the parameters of the final detection window, and controls a radio frequency detection execution unit to complete the corresponding radio frequency detection items within the detection window.

The specific implementation step includes the following sub-steps:

Step D1: parameters of a newly-opened detection window are determined according to the parameters of the reduced power window transmitted by the scheduler unit through the acknowledgement information of the reduced power window.
Reducing power transmitting parameters transmitted from the scheduler unit include:

1) a specific location of the reduced power window on the transmitting channel; and

2) an initial appearance time of the reduced power window on the transmitting channel.

The parameters of the newly-opened detection window include:

1) a specific location of the detection window;

2) an initial usage time of the detection window; and

3) a usage mode of the detection window; wherein the usage mode of the detection window specifically refers to: single usage, periodical usage or other usage modes.

Step D2: specific radio frequency detection items are completed within the detection window.
The specific radio frequency detection items are one or more of the followings:

1) signal power measurement on an adjacent channel, including: measurement of the signal power or power spectrum density on the adjacent channel, and/or the signal power measurement or signal demodulation on the adjacent channel, wherein the demodulated signals include beacon signals transmitted by transmitters on other geographic locations on the adjacent channel;

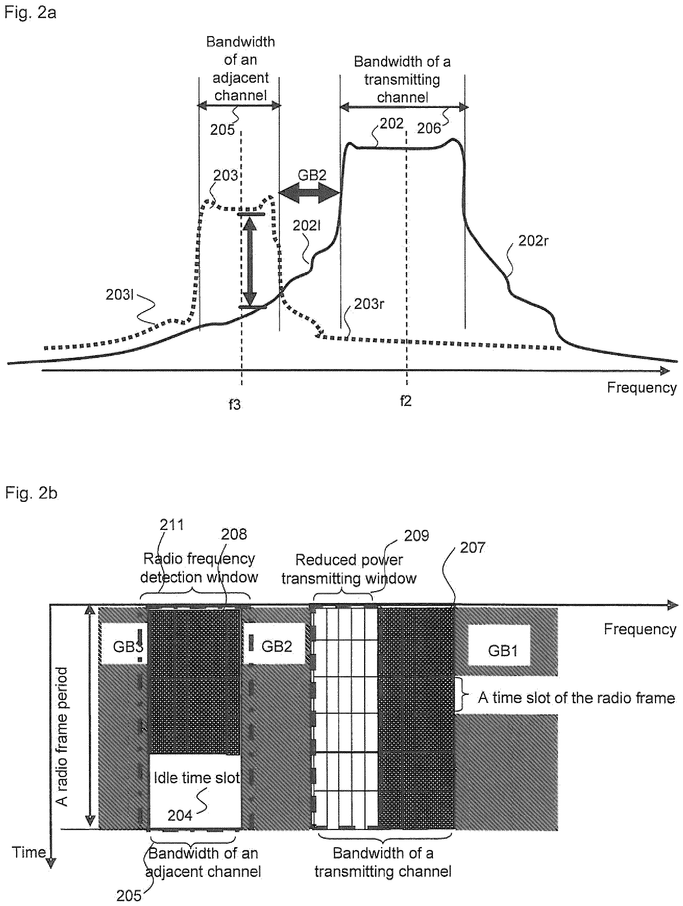

2) idle time slot measurement on an adjacent channel, referring to an idle time slot 204 existing on an adjacent channel bandwidth 205 in Fig. 2(b);

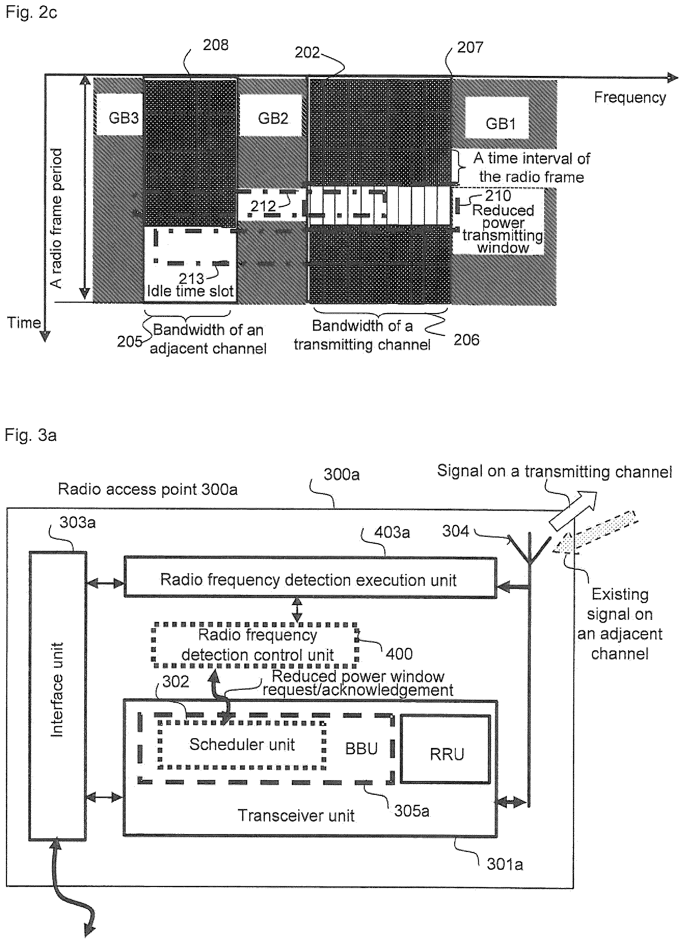

3) out-of-band leak power measurement for signals on an adjacent channel, more specifically, within an reduced power window 210 illustrated in Fig. 2(c), an out-of-band leak power of an adjacent channel is measured on a measurement window 212;

4) measurement of an out-of-band leak power for a transmitting channel, more specifically, within a time interval corresponding to an idle time slot 204 on an adjacent channel, an out-of-band leak power of a transmitting signal 202 on a transmitting channel is measured; and

5) real-time measurement of the maximum transmitting power for a transmitting channel.

Step S107: the radio frequency detection control unit stops execution of the current radio frequency detection items.

In such a case, the radio frequency detection control unit 400 terminates the current measurement.

According to the method for determining the detection window measurement as described in Step S101 to Step S107, the disclosure further provides a method for determining a maximum transmitting power of a transmitting channel in real time. The method for determining a maximum transmitting power of a transmitting channel in real time specifically includes the following sub-steps:

Step E1: on an adjacent channel of a transmitting channel, a detection window on the adjacent channel of the transmitting channel is determined according to Step S101 to Step S107; the radio frequency detection control unit controls the radio frequency detection execution unit to perform the signal power measurement within the detection window of the adjacent channel;

when the detection window on the adjacent channel of the transmitting channel is determined, processing is performed according to one of the following two situations:

if a time interval in which signals on the adjacent channel exist is already known, the detection window is configured on the determined time interval in which signals exist; and

if a time interval in which signals on the adjacent channel exist is unknown, the detection window is configured on all time intervals in which the adjacent channel may exist, for example, the whole radio frame period of the transmitting channel is taken as a time interval of the measurement window on the adjacent channel;

Step E2: an interference power of the transmitting channel on the adjacent channel, which is allowed by the adjacent channel, is determined;

a specific method includes: according to an existing power P(a) of the adjacent channel and a signal to interference ratio R(s/n) needed by the adjacent channel, an interference power P(noise) of the transmitting channel on the adjacent channel, which can be allowed by the adjacent channel, is determined as:

$$P(noise) = P(a)/R(s/n)$$

for example, the signal to interference ratio R(s/n)=xdB, and typically x=10dB; and

Step E3: the transmitting power of the transmitting channel, which is achieved when a leak power value of the transmitting channel on the adjacent channel is equal to the interference power P(noise) allowed by the adjacent channel is determined to the maximum transmitting power of the transmitting channel; more specifically, the maximum transmitting power of the transmitting channel is determined according to the two following methods:

the first method includes: the maximum transmitting power of the transmitting channel is calculated by measuring the leak power of the transmitting channel in real time;

on the adjacent channel of the transmitting channel, the detection window of the leak power of the transmitting channel on the adjacent channel of the transmitting channel is determined according to Step S101 to Step S107, the leak power P(acl) of the transmitting channel on the adjacent channel is measured, and the transmitting power P(t) of the transmitting channel is obtained when the leak power P(acl) is generated on the adjacent channel;

the ratio K of the interference power P(noise) allowed by the adjacent channel to the leak power P(acl) of the transmitting channel on the adjacent channel is calculated: K= P(noise)/P(acl),

the maximum transmitting power P(t)_max is calculated: the transmitting power P(t) of the transmitting channel which generates the out-of-band leak power P(acl) is multiplied by the ratio K to obtain P(t)_max:

$$P(t)\_max = P(t)*K;$$

and

the second method includes: the maximum transmitting power of the transmitting channel is calculated by using the prior data of the out-of-band leak power of the transmitting channel;

according to an Adjacent Channel Leakage Ratio (ACLR) formulated by out-of-band technical standards of the transmitting channel, the leak power P(acl)_unit of the transmitting channel on the bandwidth covered by the adjacent channel of the transmitting channel is calculated when the transmitting channel performs transmission based on a unit power P(unit);

the ratio K_unit of the interference power P(noise) allowed by the adjacent channel to the leak power P(acl)_unit of the transmitting channel on the adjacent channel is calculated: K_unit= P(noise)/P(acl)_unit;

the maximum transmitting power P(t)_max is calculated: the transmitting power P(unit) of the transmitting channel which generates the out-of-band leak power of the transmitting channel is multiplied by the ratio K to obtain P(t)_max:

$$P(t)\_max= P(unit){*}K.$$

Based on the method for radio frequency detection proposed by the disclosure, the disclosure further proposes a corresponding radio frequency detection device configured to perform radio frequency detection on a channel in which adjacent frequency or co-frequency interference exists.

The device for radio frequency detection proposed in an embodiment of the disclosure is as shown in Fig. 3(a) and is specifically a radio access point with a radio frequency detection function. The device includes: a transceiver unit 301a, a radio frequency detection execution unit 403, a radio frequency detection control unit 400, an antenna unit 304 and an interface unit 303a.

The transceiver unit 301a is designed according to technical standards of a communication base station in a radio communication protocol, and includes a Base Band Unit (BBU) 305a and a Remote Radio Unit (RRU). The following two implementation modes are provided for the BBU and the RRU included in the transceiver unit 301a: the BBU and the RRU are designed integrally as an integrated physical device; and the BBU and the RRU are deployed on different physical locations as separate physical devices.

Besides realizing a function for assigning time frequency resources for a terminal dynamically, which is stipulated by an existing radio communication protocol, on an uplink channel and a downlink channel of the transceiver unit 301a a scheduler unit 302 in the BBU 305a included in the transceiver unit 301a is further provided with a communication interface communicating with the radio frequency detection control unit 400, so as to control generation of a reduced power window on a transmitting channel of the transceiver unit 301a according to request information of the radio frequency detection control unit 400.

The radio frequency detection control unit 400 in the embodiment is configured to control radio frequency detection of the radio frequency detection execution unit 403 on a transmitting channel controlled by the scheduler unit 302 or an adjacent channel of the transmitting channel; in addition, the radio frequency detection control unit 400 is further configured to transmit request information for opening the reduced power window on the transmitting channel to the scheduler unit 302 in the transceiver unit and receive acknowledgement information of a reduced power window request from the scheduler unit 302 in the transceiver unit.

The radio frequency detection control unit 400 is configured to: determine parameters of a detection window according to measurement items, and determine parameters of the reduced power window of the transmitting channel interfering with the detection window according to the parameters of the detection window; the radio frequency detection control unit 400 is further configured to: transmit the reduced power window request to the transceiver unit, and determine parameters of a newly-opened detection window according to the parameters of the reduced power window in the acknowledgement information of the reduced power window request; and the radio frequency detection control unit 400 is further configured to control the radio frequency detection execution unit 403 to perform radio frequency detection of the radio frequency detection items on a transmitting channel controlled by the scheduler unit 302 or an adjacent channel of the transmitting channel.

The radio frequency detection execution unit 403 is configured to, under control of the radio frequency detection unit, complete the radio frequency detection of the corresponding radio frequency detection items within a newly-opened detection window on a transmitting channel controlled by the transceiver unit or an adjacent channel of the transmitting channel.

The interface unit 303a is configured to data transmission between the transceiver unit 301a and a network side, and measurement control and measurement data transmission between the radio frequency detection control unit 400 as well as the radio frequency detection execution unit 403 and the network side.

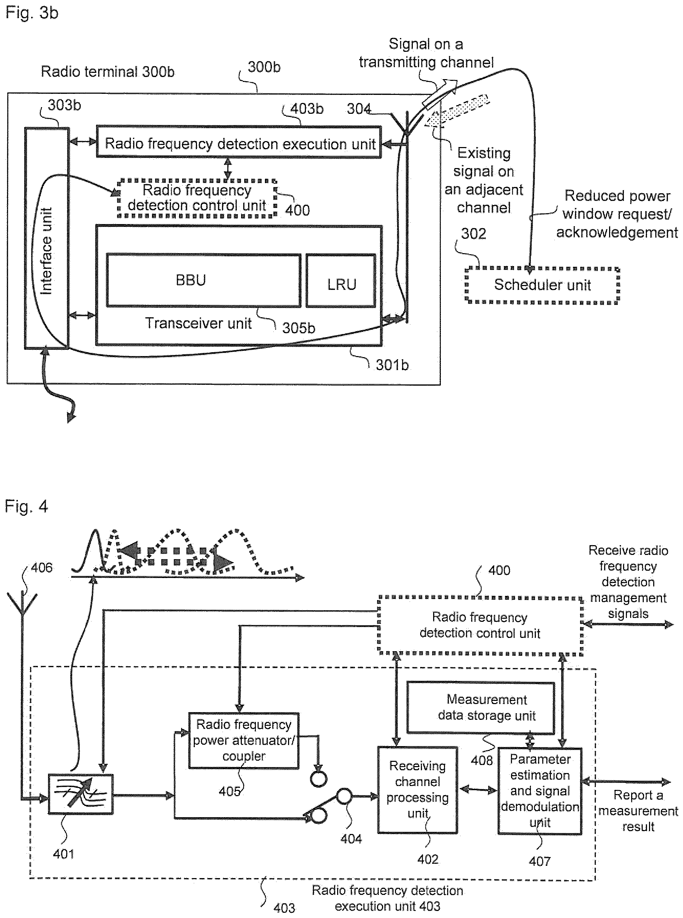

A device for radio frequency detection provided by an embodiment of the disclosure is as shown in Fig. 3(b) and is specifically a radio terminal with a radio frequency detection function. The device includes: a transceiver unit 301b, a radio frequency detection execution unit 403, a radio frequency detection control unit 400, an antenna unit 304 and an interface unit 303b.

The transceiver unit 301b is designed according to technical standards of a communication terminal in a radio communication protocol and includes a BBU 305b, and a Local Radio Unit (LRU). The BBU and the LRU included in the transceiver unit 301b are designed integrally as an integrated physical device.

The radio frequency detection control unit 400 in the embodiment is configured to control radio frequency detection of the radio frequency detection execution unit 403 on a transmitting channel in the transceiver unit 301 controlled by the scheduler unit 302 at the network side or on an adjacent channel of the transmitting channel. In addition, the radio frequency detection control unit 400 is further configured to transmit request information for opening the reduced power window on the transmitting channel of the transceiver unit 301 to the scheduler unit 302 at the network side, and receive acknowledgement information of a reduced power window request from the scheduler unit 302 at the network side. In the acknowledgement information of the reduced power window request sent to the radio frequency detection control unit 400, the scheduler unit 302 at the network side is implemented by assigning a transmitting time of the transmitting channel of the transceiver unit 301 and a measurement time of the radio frequency detection execution unit 403 on an adjacent channel and/or a transmitting channel on different time intervals.

The interface unit 303b is configured to data transmission between the transceiver unit 301b and a device or network which performs communication by using the transceiver unit 301b.

A work process of the radio frequency detection device according to the disclosure includes:

the radio frequency detection device configures a transmitting channel on a first frequency band; besides assigning downlink transmission resources for a terminal served by the radio frequency detection device on the first frequency band, the scheduler unit 302 further opens the reduced power window on the first frequency band and/or an adjacent frequency band of the first frequency band according to reduced power window request information of a radio frequency detection control unit 400, and transmits a time location in which the reduced power window appears to the radio frequency detection control unit 400; and the radio frequency detection control unit 400 configures a detection window on a time interval in which the reduced power window appears and controls radio frequency detection of the radio frequency detection execution unit 403 on a transmitting channel controlled by the scheduler unit 302 or an adjacent channel of the transmitting channel.

The radio frequency detection execution unit 403 according to the disclosure includes: a receiving channel processing unit 402, a parameter estimation and signal demodulation unit 407 and a measurement data storage unit 408.

The receiving channel processing unit is configured to perform low noise amplification and frequency conversion processing of radio frequency signals on signals within the measurement window on the transmitting channel and/or the adjacent channel of the transmitting channel.

The parameter estimation and signal demodulation unit performs parameter estimation and/or signal demodulation on signals from the receiving channel processing unit.

The measurement data storage unit 408 is configured to store a measurement result of the parameter estimation and signal demodulation unit 407.

An implementation method of the radio frequency detection execution unit 403 is as shown in Fig. 4, which includes the following units: an adjustable band-pass filter 401, a radio frequency power attenuator/coupler 405, a radio frequency switch 406, a receiving channel processing unit 402, a parameter estimation and signal demodulation unit 407 and a measurement data storage unit 408.

The adjustable band-pass filter is configured to receive a radio frequency detection signal from an antenna unit.

An radio frequency detection control unit 400 controls a center frequency and a bandwidth of the adjustable band-pass filter 401 and the receiving channel processing unit 402 according to control information sent by the network side, controls an attenuation amount of the radio frequency power attenuator/coupler 405, and controls an operating mode of the parameter estimation and signal demodulation unit 407.

The radio frequency power attenuator/coupler 405 is configured to perform radio frequency signal power attenuation on radio frequency signals outputted by the adjustable band-pass filter 401, and input the attenuated radio frequency signals into the receiving channel processing unit 402 by the radio frequency switch 406. In another embodiment of the disclosure, the radio frequency switch 406 is not included, and the signals outputted by the radio frequency power attenuator/coupler 405 are transmitted to the receiving channel processing unit directly.

The radio frequency detection device is characterized in that it includes a radio frequency detection control unit 400, which is configured to configure a measurement window for a radio frequency detection execution unit 403 on an adjacent channel of a transmitting channel of the transceiver unit 301 and request for a reduced power window from a scheduler unit to which the transmitting channel of the transceiver unit 301 belongs.

Preferably, the radio frequency detection execution unit 403 is characterized in that the radio frequency power attenuator/coupler 405 and the measurement data storage unit 408 are included in a receiving channel.

The receiving channel processing unit 402 of the radio frequency detection execution unit 403 is implemented by one of the following methods:

1) when a transmitting channel of the transceiver unit 301 is a downlink channel of an FDD system or a terrestrial television broadcasting, on a frequency band used by the transmitting channel of the transceiver unit 301, a radio frequency receiving channel of the radio frequency detection execution unit 403 is implemented by a radio frequency receiving chip of a communication terminal of the FDD system or the terrestrial television broadcasting; on an adjacent channel of the transmitting channel of the transceiver unit 301, if the adjacent channel is the downlink channel of the FDD system or the terrestrial television broadcasting, then it is implemented on the adjacent channel by the a radio frequency receiving chip of a communication terminal of the FDD system or the terrestrial television broadcasting; and if the adjacent channel is the downlink channel of the TDD system, then it is implemented on the adjacent channel by a radio frequency receiving chip of a communication terminal of the TDD system; and

2) when a transmitting channel of the transceiver unit 301 is a downlink channel of a TDD system, on a frequency band used by the transmitting channel of the transceiver unit 301, a radio frequency receiving channel of the radio frequency detection execution unit 403 is implemented by a radio frequency receiving chip of a communication terminal of the TDD system; on an adjacent channel of the transmitting channel of the transceiver unit 301, if the adjacent channel is a downlink channel of an FDD system or a terrestrial television broadcasting, then it is implemented on the adjacent channel by a radio frequency receiving chip of a communication terminal of the FDD system or the terrestrial television broadcasting; and if the adjacent channel is the downlink channel of the TDD system, then it is implemented on the adjacent channel by a radio frequency receiving chip of a communication terminal of the TDD system.

The parameter estimation and signal demodulation unit 407 of the radio frequency detection execution unit 403 is realized by a terminal receiving baseband processing chip and/or a digital processor.

At a network side, the radio frequency detection execution unit 403 is installed on an antenna location of a base station or within an RRU of the base station.

At a terminal side, the radio frequency detection execution unit 403 is installed on a location of a terminal or within the terminal.

The radio frequency detection control unit 400 is implemented by the digital process according to one of the following specific implementation modes:

1) it is implemented with the parameter estimation and signal demodulation unit 407 on the same digital processor;

2) it is implemented on a digital processor in a BBU; and

3) it is implemented by an independent digital processor.

A radio frequency detection control unit 400 at a network side is installed within a BBU of a base station or at the location of the BBU.

A radio frequency detection control unit 400b at a terminal side is installed within a terminal or at the location of the terminal.

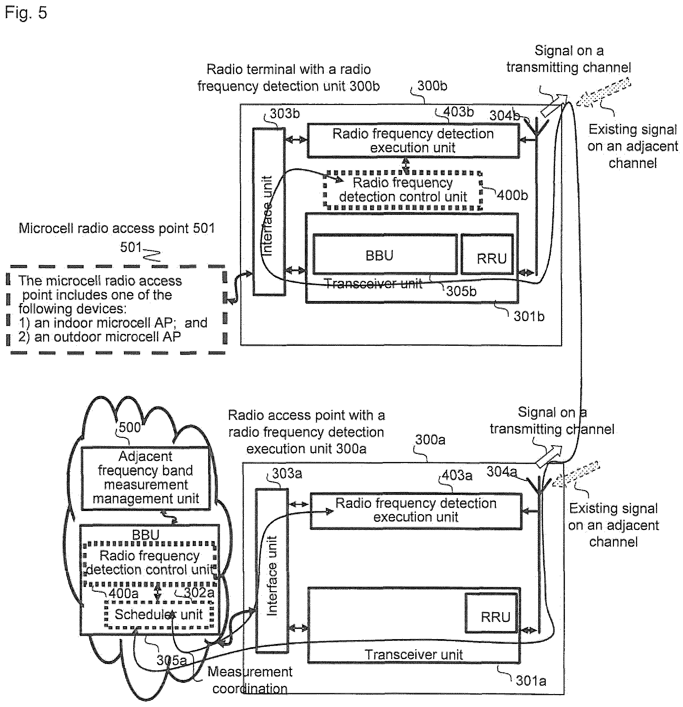

Fig. 5 shows a structural diagram illustrating a radio frequency detection system supporting adjacent channel radio frequency detection according to the disclosure. The system includes: an adjacent frequency band measurement management unit 500, a radio access point 300a provided with a radio frequency detection execution unit 403a, a BBU unit 305a provided with a radio frequency detection control unit 400a, and a ratio terminal 300b provided with both a radio frequency detection execution unit 403b and a radio frequency detection control unit 400b.

The adjacent frequency band measurement management unit 500 is a network element or a functional unit located at a network side. The adjacent frequency band measurement management unit 500 manages radio frequency detection items which need to be executed by the radio frequency detection execution unit 403a in the radio access point 300a and/or the radio frequency detection execution unit 403a in the ratio terminal 300b. Specific management content includes one or more of the followings:

1) transmitting prior information of an adjacent channel of a transmitting channel of the radio access point 300a and/or the radio terminal to the radio frequency detection control unit 400b and/or the radio frequency detection control unit 400a;

2) transmitting detection item trigger information to the radio frequency detection control unit 400b of the radio terminal side and/or the radio frequency detection control unit 400a at the radio access point side; and

3) receiving a measurement result from the radio frequency detection execution unit 403a at the radio terminal side and/or the radio frequency detection execution unit 403b at the radio terminal side.

The prior information of the adjacent frequency band includes a channel width on the adjacent frequency band and a radio technology type used by a channel.

A work process for implementing adjacent frequency band measurement by the system according to the disclosure includes:

the adjacent frequency band measurement management unit 500 transmits detection item trigger information and prior information of an adjacent channel to the radio frequency detection control unit 400a and/or the radio frequency detection control unit 400b;

the radio frequency detection control unit 400a and/or the radio frequency detection control unit 400b determine/determines their/its detection windows/detection window or reduced power windows/reduced power windows according to the received detection item trigger information and prior information of the adjacent channel;

the radio frequency detection control unit 400a and/or the radio frequency detection control unit 400b transmit/transmits reduced power window request information to the scheduler unit 302;

he scheduler unit 302 transmits acknowledgement information of the reduced power window request to the radio frequency detection control unit 400a and/or the radio frequency detection control unit 400b;

the scheduler unit 302 determines a location of a detection window for the radio frequency detection control unit 400a and/or the radio frequency detection control unit 400b according to a location of a reduced power window designated by the acknowledgement information of the reduced power window request, performs data acquisition needed by detection items transmitted from the adjacent frequency band measurement management unit 500 within the detection window, further completes the detection items, and reports a measurement result to the adjacent frequency band measurement management unit 500; and

he adjacent frequency band measurement management unit 500 assigns, according to the measurement result of the radio frequency detection control unit 400a and/or the radio frequency detection control unit 400b, a maximum transmitting power for a transmitting channel of a radio access point 300a and/or a transmitting channel of a ratio terminal 300b, or a guard bandwidth for the transmitting channel of the radio access point 300a and/or the transmitting channel of the ratio terminal 300b.

Embodiment 1

The present embodiment provides an application example of a device for radio frequency detection proposed by the disclosure, as shown in Fig. 3(a) and Fig. 3(b). In a radio access point 300a with a radio frequency detection function as shown in Fig. 3(a), a radio frequency channel included by a transceiver unit 301a is a radio frequency channel unit RRU designed according to technical standards of an LTE TDD base station, a transmitting channel of the channel unit is configured on a first idle frequency band of television broadcasting from 470MHz to 790MHz. All transceiver channels of the transceiver unit 301a are located on the first idle frequency band. A BBU 305a included by the transceiver unit 301a and a scheduler unit 302 of the BBU 305a are configured at a network side. A radio frequency detection control unit 400 is configured within the BBU 305a. A radio frequency channel unit RRU between a radio frequency detection execution unit 403a and the transceiver unit 301a is configured on a base station address. An interface unit 303a is a communication interface designed according to a standard communication interface Common Public Radio Interface (CPRI).
A transmission channel for transmitting reduced power window parameters exists between the radio frequency detection control unit 400 and the scheduler unit 302. The scheduler unit 302 opens, according to the reduced power window parameters requested by the radio frequency detection control unit 400, a reduced power window on a transmitting channel which is controlled by the scheduler unit and configured on the first idle frequency band. In addition, the radio frequency detection control unit 400 transmits, according to acknowledgement information of the reduced power window request transmitted by the scheduler unit 302, a measurement control instruction to the radio frequency detection execution unit 403 through the standard communication interface CPRI.
In the present embodiment, a radio frequency receiving channel processing unit 402 of the radio frequency detection execution unit 403a is implemented by a radio frequency receiving chip of an LTE TDD terminal or radio frequency receiving channel chip of a terrestrial television broadcasting; wherein a radio frequency channel of the radio frequency receiving chip of the LTE TDD terminal performs low noise amplification of radio frequency signals on the first idle frequency band, and the radio frequency receiving channel chip of the terrestrial television broadcasting performs low noise amplification of television broadcasting signals on an adjacent frequency band of the first idle frequency band.
In the present embodiment, the parameter estimation and signal demodulation unit 407 of the radio frequency detection execution unit 403a includes a baseband processing chip at an LTE TDD terminal side and a baseband processing chip at a terrestrial television broadcasting receiver.
At a network side, the radio frequency detection execution unit 403 is installed within an RRU of an LTE TDD distributed base station.
In a radio terminal 300b with the radio frequency detection function as shown in Fig. 3(b), a radio frequency channel included by a transceiver unit 301b is a radio frequency channel unit designed according to technical standards of an LTE TDD terminal, and a transmitting channel of the channel unit is configured on a first idle frequency band of television broadcasting from 470MHz to 790MHz. All transceiver channels of the transceiver unit 301b are located on the first idle frequency band, and the transceiver unit 301b establishes a communication link with a transceiver unit 301a according to air interface standards of the LTE TDD. A BBU 305b included in the transceiver unit 301b is a baseband processing chip at a terminal side implemented according to the LTE TDD technical standards. A radio frequency detection control unit 400 is a function unit implemented by a digital processor. A radio frequency detection execution unit 403b and the radio frequency detection control unit 400 are configured within a terminal or at a location where the terminal is installed. An interface unit 303b is a wire interface communicating with a Wireless Local Area Network (WLAN) node.

A transmission channel for transmitting reduced power window parameters exists between the radio frequency detection control unit 400b and the scheduler unit 302 at a network side. The scheduler unit 302 at the network side opens, according to reduced power window parameters requested by the radio frequency detection control unit 400b, a reduced power window on the first idle frequency band for the radio frequency detection execution unit 403b according to the following principles: 1) uplink resources are not configured for a terminal to which the radio frequency detection control unit 400b belongs within a time interval and a frequency interval in which the reduced power window appears; and 2) uplink resources are not configured for other terminals controlled by the scheduler unit 302 on the first idle frequency band within the time interval and the frequency interval in which the reduced power window appears. Subsequently, the scheduler unit 302 transmits reduced power window acknowledgement information to the radio frequency detection control unit 400b through a receiving channel of the transceiver unit 301b, and the radio frequency detection control unit 400b controls, according to the reduced power window acknowledgement information transmitted by the scheduler unit 302, the radio frequency detection execution unit 403b to complete the designated measurement items within a corresponding detection window.

In the present embodiment, a radio frequency receiving channel processing unit 402b of the radio frequency detection execution unit 403b is implemented by a radio frequency receiving chip of an LTE TDD terminal and a radio frequency receiving channel chip of a terrestrial television broadcasting; wherein a radio frequency channel of the radio frequency receiving chip of the LTE TDD terminal performs low noise amplification of radio frequency signals on the first idle frequency band, and the radio frequency receiving channel chip of the terrestrial television broadcasting performs low noise amplification of television broadcasting signals on an adjacent frequency band of the first idle frequency band.

In the present embodiment, a parameter estimation and signal demodulation unit 407 of the radio frequency detection execution unit 403b includes a baseband processing chip at an LTE TDD terminal side and a baseband processing chip at a terrestrial television broadcasting receiver. At the terminal side, the radio frequency detection execution unit 403b is installed within the LTE TDD terminal or at the same address of the terminal.

Embodiment 2

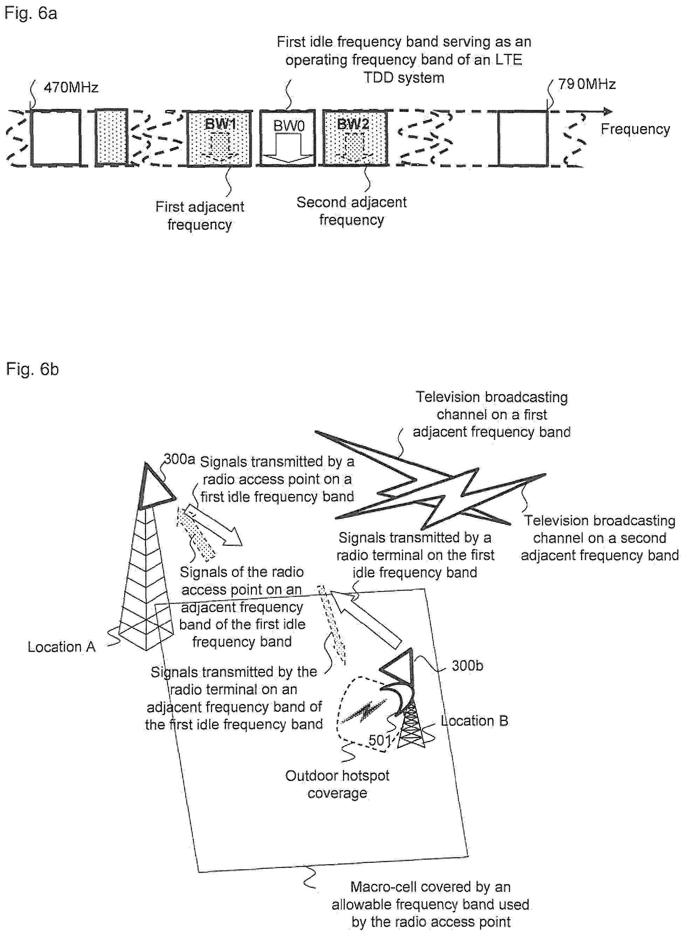

The present embodiment provides an embodiment for a radio frequency detection system proposed by the disclosure, which is specifically a fixed radio access system for configuring a channel on an idle frequency band of a television broadcasting frequency band. As shown in Fig. 5, a system deployment mode refers to Fig. 6a and Fig. 6b.

In the present embodiment, a system shown in Fig. 5 includes: an adjacent frequency band measurement management unit 500, one or more radio access points 300a with a radio frequency detection execution unit 403a, a BBU unit 305a provided with a radio frequency detection control unit 400a, and one or more ratio terminals 300b provided with both a radio frequency detection execution unit 403b and a radio frequency detection control unit 400b, and specifically includes the followings: a radio frequency channel included by a transceiver unit 301a is a radio frequency channel unit RRU designed according to the technical standards of the LTE TDD base station, and a first idle frequency band in which the channel unit works is located on an idle frequency band of television broadcasting from 470MHz to 790MHz. All transceiver channels of the transceiver unit 301a are located on the first idle frequency band. A BBU 305a included by the transceiver unit 301a and a scheduler unit 302a of the BBU 305a are configured at a network side. The radio frequency detection control unit 400a and the scheduler unit 302a are configured within the BBU 305a, and an interface unit 303a is a CPRI standard communication interface.

The transceiver unit 301b of a radio terminal 300b provided with a radio frequency detection execution unit is a transceiver unit designed according to technical standards of an LTE TDD terminal. A first idle frequency band in which the transceiver unit 301b works is similar to that in which the transceiver unit 301a works, that is, the transceiver channels of the transceiver unit 301b are configured on the first idle frequency band located within a range of 470MHz to 790MHz.

The adjacent frequency band measurement management unit 500 is a functional unit configured to perform united resource management at a network side. In the present disclosure, the adjacent frequency band measurement management unit 500 is implemented within an independent united resource management device which is installed at a location of the BBU to manage adjacent channel measurement in a distributed united resource management mode. Another implementation mode of the adjacent frequency band measurement management unit 500 is configured at a Service Gateway/Access Gateway (SGW/AGW) location to implement the adjacent channel measurement management in a centralized mode.

The adjacent frequency band measurement management unit 500 searches, at the network side, an operating frequency band of each radio access point and an adjacent frequency band of the operating frequency band as well as ratio technology type information of a channel on the adjacent frequency band, stores and transmits them to a radio frequency detection control unit 400a/b of the corresponding radio access point 300a and/or radio terminal 300b. The adjacent frequency band measurement management unit 500 transmits measurement management information to the radio frequency detection control unit 400a/b in the radio access point 300a and/or radio terminal 300b. In the present embodiment, the adjacent frequency band measurement management unit 500 transmits prior information of an adjacent frequency bandwidth 1/bandwidth 2 (BW1/BW2) to the radio frequency detection control unit 400a/b, wherein the prior information includes the BW1 and BW2 of 8MHz and a channel type of a terrestrial digital broadcasting channel. With the help of the prior information, the radio frequency detection control unit 400a/b determines the bandwidth of a receiving channel on the BW1 and BW2 and a signal processing mode on the BW1 and BW2 for a radio frequency detection execution unit 403a/b.

The system provided by the present embodiment may further configured to determine an adjacent frequency band guard bandwidth for an LTE TDD channel configured on the first idle frequency under the management of the adjacent frequency band measurement management unit 500. A method for determining a guard bandwidth between an LTE TDD channel on a first idle frequency band and an adjacent television broadcasting channel thereof by the system corresponding to the present embodiment will be described by taking an example hereinafter:
an adjacent frequency band measurement management unit 500 transmits adjacent channel power measurement item indication to a radio frequency detection control unit 400a in a BBU at a network side; and the radio frequency detection control unit 400a in the BBU at the network side controls a radio frequency detection execution unit 403a in a radio access point to perform signal power measurement on a television broadcasting channel adjacent to an LTE TDD channel on a first idle frequency band, and reports the measurement result P(a) to the adjacent frequency band measurement management unit 500.

The adjacent frequency band measurement management unit 500 determines, according to an existing power P(a) of the adjacent channel and a signal to interference ratio R(s/n) needed by the adjacent channel, an interference power P(noise) allowed by the adjacent channel:

$$P(noise)= P(a)/R(s/n).$$

In the present embodiment, the signal to interference ratio R(s/n)=xdB, and typically x=10dB.

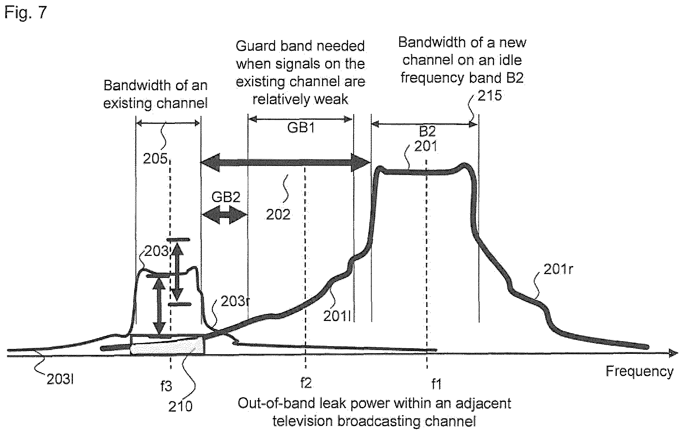

The adjacent frequency band measurement management unit 500 calculates, according to an out-of-band leak power curve obtained by previous measurement or obtained by technical standards of an LTE TDD transmitting channel (referring to 201 in the curve shown in Fig. 7), a frequency bandwidth BW(TV) of the LTE TDD transmitting channel of which a bandwidth is equal to a bandwidth of the television broadcasting channel on the out-of-band leak power curve and a center frequency f3 of the frequency bandwidth BW(TV) when an out-of-band leak power P(acl) 210 is equal to the maximum interference power P(noise) allowed by the television broadcasting channel under a designated transmitting power.

The adjacent frequency band measurement management unit 500 determines a guard bandwidth BW(guard) according to a distance between the center frequency f3 of the frequency bandwidth BW(TV) and a center frequency f1 of the LTE TDD transmitting channel:

$$BG(guard)= D\_(f1{\sim}f3)-0.5{\times}(B1+B2).$$

A specific method includes: D_f1/f3 is a distance between a center frequency f1 of a channel deployed on the first idle frequency band and a center frequency of an existing television channel. The guard bandwidth BG(guard) of the center frequency of the channel deployed on the idle frequency band and the existing channel is equal to a difference obtained by subtracting the sum of a half of the channel bandwidth 215 (recorded as B2) on the idle frequency band and a half of the bandwidth 205 (recorded as B1) of the existing channel from D_(f1-f2).

The above are only preferred embodiments of the disclosure and should not be used for limiting the scope of protection of the disclosure.

**INDUSTRIAL APPLICABILITY**

The method for radio frequency measurement disclosed by the disclosure realizes to flexibly open a zero-power transmitting window by using the capability of a scheduler unit for dynamically managing time-frequency resources to match requirements of a measurement window on a transmitting channel controlled by the scheduler unit. A transmission channel for transmitting measurement window information and/or zero-power transmitting window information exists in a scheduler unit and a measurement unit within the detection device disclosed by the disclosure. By means of a method for opening the zero-power transmitting window according to the disclosure, the radio frequency detection unit not only can realize power measurement and/or information demodulation of an existing radio channel signal on an adjacent channel of a local transmitting channel, but also can realize online measurement of an out-of-band leak power and/or a transmitting power of a local transmitter. The radio detection system provided by the disclosure can self-adaptively determine the width of a guard frequency band between its work channel and an adjacent channel performing transmission by using a different station address.

## Claims

1. A method for radio frequency power detection, comprising:

   determining (S101), by a radio frequency detection control unit, parameters of a detection window according to radio frequency power detection items; wherein the radio frequency power detection items comprise one or more of following radio frequency power detection items:

   measurement of a signal power on an adjacent channel;
   measurement of an idle time slot on an adjacent channel;
   measurement of an out-of-band leak power for a signal on an adjacent channel;
   measurement of an out-of-band leak power for a transmitting channel; and
   measurement of a maximum transmitting power for a transmitting channel;

   determining (S102), by the radio frequency detection control unit, parameters of a reduced power window of the transmitting channel interfering with the detection window according to the parameters of the detection window;
   transmitting (S103), by the radio frequency detection control unit, a reduced power window request to a scheduler unit to which the transmitting channel interfering with the detection window belongs;
   transmitting (S104), by the scheduler unit, acknowledgement information of the reduced power window request to the radio frequency detection control unit; and
   determining (S105), by the radio frequency detection control unit, whether the reduced power window request is confirmed according to the acknowledgement information of the reduced power window request fed back by the scheduler unit; if the reduced power window request is confirmed, the radio frequency detection control unit determines (S106) parameters of a newly-opened detection window according to the parameters of the reduced power window fed back by the scheduler unit, and controls a radio frequency detection execution unit to complete corresponding radio frequency power detection items in the newly-opened detection window, wherein the newly-opened detection window is on the adjacent channel of the transmitting channel or on the adjacent channel and the transmitting channel; otherwise, the radio frequency detection control unit stops (S107) execution of the radio frequency power detection items.

2. The method according to claim 1, wherein the parameters of the detection window comprise: a size of the detection window, a candidate configuration range of the detection window and an acquisition mode of radio frequency data; and a method for determining the parameters of the detection window comprises:

   the size of the detection window is determined according to a two-dimensional scale of time and frequencies needed to be covered for performing radio frequency sample data acquisition once on the radio frequency power detection items;
   the candidate configuration range of the detection window is determined according to a location set of the detection window which is able to obtain equivalent radio frequency sample data; and
   the acquisition mode of the radio frequency data is one of two following modes: measurement completed by performing the radio frequency sample data acquisition once and measurement completed by performing the radio frequency sample data acquisition for multiple times.

3. The method according to claim 2, wherein the determining, by the ratio frequency detection control unit, the parameters of the reduced power window of the transmitting channel interfering with the detection window according to the parameters of the detection window comprises: determination of the size of the reduced power window, determination of the candidate configuration range of the reduced power window, and determination for an opening mode of the reduced power window;
   a method for determining the size of the reduced power window comprises: determining a time interval covered by the reduced power window as being equal to or greater than a time interval covered by the detection window; and determining a width of a sub-frequency band, which is located on a frequency band occupied by the transmitting channel and of which transmitting power generates an interference strength being greater than a predetermined threshold within the detection window, as the size of the reduced power window;
   a method for determining the candidate configuration range of the reduced power window comprises: taking a time interval in the candidate configuration range of the detection window as a candidate time range of the reduced power window; and taking a change range allowed by a frequency scale of the reduced power window as the candidate configuration range of the reduced power window; and
   a method for determining the opening mode of the reduced power window comprises: for a mode of performing the radio frequency sample data acquisition once, opening the reduced power window once only on a frequency band where the transmitting channel locates in a measurement event; and for a mode of performing the radio frequency sample data acquisition for multiple times, opening the reduced power window for multiple times on a frequency band where the transmitting channel locates in a measurement event.

4. The method according to claim 3, wherein the transmitting the reduced power window request to the scheduler unit to which the transmitting channel interfering with the detection window belongs comprises:

> transmitting, by the radio frequency detection control unit, the reduced power window request to the scheduler unit to which the transmitting channel interfering with the detection window belongs through an uplink radio channel of a radio terminal to which the radio frequency detection control unit belongs, or transmitting, by the radio frequency detection control unit, the reduced power window request through a network side channel between the radio frequency detection control unit and the scheduler unit to which the transmitting channel interfering with the detection window belongs; and the reduced power window request carries the parameters of the reduced power window.

5. The method according to claim 4, wherein the reduced power window request further carries priority information, wherein the priority information is configured to indicate that: the scheduler unit is forced to open the reduced power window on the transmitting channel; or the scheduler unit determines whether to open the reduced power window on the transmitting channel according to current service conditions.

6. The method according to claim 5, wherein according to difference of the priority information, the transmitting the acknowledgement information of the reduced power window request to the radio frequency detection control unit by the scheduler unit comprises:

> when the priority information indicates that the scheduler unit is forced to open the reduced power window on the transmitting channel, opening, by the scheduler unit, the reduced power window on the transmitting channel controlled by the scheduler unit according to the information included in the reduced power window request, and transmitting, by the scheduler unit, the acknowledgement information of the reduced power window request to the radio frequency detection control unit; when the priority information indicates that the scheduler unit determines whether to open the reduced power window on the transmitting channel according to the current service conditions, determining, by the scheduler unit, whether there are resources which satisfy a requirement in idle time frequency resources owned by the transmitting channel controlled by the scheduler unit or unavailable time frequency resources according to a reduced power window scale and a candidate configuration range included in the reduced power window request, when there are no resources which satisfy the requirement, determining, by the scheduler unit, whether resources needed by the reduced power window can be provided by reducing data transmission rate of some users or interrupt data transmission of some users for a short time; and when the resources needed by the reduced power window satisfy the requirement, transmitting, by the scheduler unit, the acknowledgement information of the reduced power window to the radio frequency detection control unit; otherwise, transmitting, by the scheduler unit, information of refusing to open the reduced power window.

7. The method according to claim 1, wherein when the scheduler unit at a network side opens, according to the reduced power window request of the radio frequency detection control unit at a terminal side, the reduced power window on an adjacent channel of an uplink channel for the radio frequency detection execution unit, uplink resources are not configured for a terminal to which the radio frequency detection control unit belongs within a time interval and a frequency interval in which the reduced power window appears; and uplink resources are not configured on a first idle frequency band for other terminals controlled by the scheduler unit within the time interval and the frequency interval in which the reduced power window appears; and transmitting, by the scheduler unit, the acknowledgement information of the reduced power window to the radio frequency detection control unit via a receiving channel of a transceiver unit, and controlling, by the radio frequency detection control unit, the radio frequency detection execution unit to complete designated radio frequency power detection items in the corresponding detection window according to the acknowledgement information of the reduced power window from the scheduler.

8. A method for determining a maximum transmitting power of a transmitting channel in real time, comprising:

determining, on the adjacent channel of the transmitting channel, a measurement window of a leak power of the transmitting channel on the adjacent channel according to the radio frequency power detection method according to claim 1, measuring the leak power P(acl) of the transmitting channel on the adjacent channel, and obtaining a transmitting power P(t) of the transmitting channel when the leak power is generated on the adjacent channel;

calculating a ratio K of an interference power P(noise) allowed by the adjacent channel to the leak power P(acl) of the transmitting channel on the adjacent channel; and

determining a product of the transmitting power P(t) of the transmitting channel and the ratio K as the maximum transmitting power of the transmitting channel.

9. A device for radio frequency power detection, comprising:

   a radio frequency detection control unit (400) configured to: determine parameters of a detection window according to radio frequency power detection items, wherein the radio frequency power detection items comprise one or more of following radio frequency power detection items:

   measurement of a signal power on an adjacent channel;
   measurement of an idle time slot on an adjacent channel;
   measurement of an out-of-band leak power for a signal on an adjacent channel;
   measurement of an out-of-band leak power for a transmitting channel; and
   measurement of a maximum transmitting power for a transmitting channel;

   determine parameters of a reduced power window of a transmitting channel interfering with the detection window according to the parameters of the detection window; and transmit a reduced power window request to a transceiver unit;
   a transceiver unit (301a and 301b) configured to control generation of the reduced power window on the transmitting channel of the transceiver unit according to the request of a radio frequency detection control unit;
   the radio frequency detection control unit (400) is further configured to: determine parameters of a newly-opened detection window according to the parameters of the reduced power window in acknowledgement information of the reduced power window request; and control a radio frequency detection execution unit;
   a radio frequency detection execution unit (403a and 403b) configured to, under control of the radio frequency detection control unit, complete radio frequency power detection of the corresponding radio frequency power detection items within the newly-opened detection window on the adjacent channel of the transmitting channel controlled by the transceiver unit or on the adjacent channel and the transmitting channel; and

an interface unit (303a and 303b) configured to data transmission between the transceiver unit and a network side, and measurement control and measurement data transmission between the radio frequency detection control unit as well as the radio frequency detection execution unit and the network side.

10. The device according to claim 9, further comprising: a scheduler unit (302) located in the transceiver unit or at the network side and configured to: receive the reduced power window request sent by the radio frequency detection control unit, determine the parameters of the reduced power window according to the parameters of the detection window provided by the radio detection control unit and transmit the acknowledgement information of the reduced power window to the radio frequency detection control unit; wherein the acknowledgement information of the reduced power window comprises the parameters of the reduced power window.

11. The device according to claim 9, wherein the radio frequency detection execution unit (403a and 403b) comprises:

   an adjustable band-pass filter (401) configured to perform band-pass filtering on radio frequency detection signals received from an antenna unit under control of the radio frequency detection control unit;
   a radio frequency power attenuator/coupler (405) configured to perform, under control of the radio frequency detection control unit, radio frequency signal power attenuation on radio frequency detection signals outputted by the adjustable band-pass filter; wherein the attenuated radio frequency signals are inputted into a receiving channel processing unit;
   the receiving channel processing unit (402) configured to perform, under control of the radio frequency detection control unit, low noise amplification and frequency conversion processing on the radio frequency signals on a transmitting channel and/or an adjacent channel of a transmitting channel;
   a parameter estimation and signal demodulation unit (407) configured to perform, under control of the radio frequency detection control unit, parameter estimation and/or signal demodulation on signals from the receiving channel processing unit; and

a measurement data storage unit (408) configured to store a measurement result of the parameter estimation and signal demodulation unit.

12. A system for radio frequency power detection, comprising:

a radio access point (300a) and a radio terminal (300b)realized based on the radio frequency power detection device according to claim 9; and an adjacent frequency band measurement management unit (500) located at the network side and configured to perform management on the radio frequency power detection items which need to be executed by the radio frequency detection execution unit in the radio access point and/or the radio frequency detection execution unit in the radio terminal; contents of the management comprise one or more of followings:

transmitting prior information of the adjacent channel of the transmitting channel of the radio access point and/or the radio terminal to the radio frequency detection control unit of the radio access point and/or the radio terminal;

transmitting detection item trigger information to the radio frequency detection control unit of the radio access point and/or the radio terminal; and

receiving a measurement result from the radio frequency detection control unit of the radio access point and/or the radio terminal.

**Patentansprüche**

1. Verfahren zur Hochfrequenzleistungserfassung, umfassend:

Bestimmen (S101), mittels einer Hochfrequenzerfassungssteuereinheit, von Parametern eines Erfassungsfensters gemäß Hochfrequenzleistungserfassungsgegenständen; wobei die Hochfrequenzleistungserfassungsgegenstände einen oder mehrere der folgenden Hochfrequenzleistungserfassungsgegenstände umfassen:

Messung einer Signalleistung auf einem benachbarten Kanal;
Messung eines Leerlaufzeitschlitzes auf einem benachbarten Kanal;
Messung einer Außerbandverlustleistung für ein Signal auf einem benachbarten Kanal;
Messung einer Außerbandverlustleistung für einen Sendekanal; und
Messung einer maximalen Sendeleistung für einen Sendekanal;

Bestimmen (S102), durch die Hochfrequenzerfassungssteuereinheit, von Parametern eines verminderten Leistungsfensters des Sendekanals, der mit dem Erfassungsfenster interferiert, gemäß den Parametern des Erfassungsfensters;
Senden (S103), durch die Hochfrequenzerfassungssteuereinheit, einer vermindertes Leistungsfenster-Anfrage zu einer Ablaufsteuereinheit, zu welcher der Sendekanal, der mit dem Erfassungsfenster interferiert, gehört;
Senden (S104), durch die Ablaufsteuereinheit, von Bestätigungsinformationen der vermindertes Leistungsfenster-Anfrage zu der Hochfrequenzerfassungssteuereinheit; und
Bestimmen (S105), durch die Hochfrequenzerfassungssteuereinheit, ob die vermindertes Leistungsfenster-Anfrage gemäß der Bestätigungsinformationen der vermindertes Leistungsfenster-Anfrage, die durch die Ablaufsteuereinheit zurückgeführt worden ist, bestätigt wird; wenn die vermindertes Leistungsfenster-Anfrage bestätigt wird, bestimmt (S106) die Hochfrequenzerfassungssteuereinheit Parameter eines neu geöffneten Erfassungsfensters gemäß den Parametern der vermindertes Leistungsfenster-Anfrage, die durch die Ablaufsteuereinheit zurückgeführt worden ist, und steuert eine Hochfrequenzerfassungsausführungseinheit dahingehend, entsprechende Hochfrequenzleistungserfassungsgegenstände in dem neu geöffneten Erfassungsfenster zu vervollständigen, wobei das neu geöffnete Erfassungsfenster auf dem benachbarten Kanal des Sendekanals oder auf dem benachbarten Kanal und dem Sendekanal vorliegt; ansonsten stoppt (S107) die Hochfrequenzerfassungssteuereinheit die Ausführung der Hochfrequenzleistungserfassungsgegenstände.

2. Verfahren nach Anspruch 1, bei dem die Parameter des Erfassungsfensters umfassen: eine Größe des Erfassungsfensters, einen potenziellen Konfigurationsbereich des Erfassungsfensters und einen Erfassungsmodus von Hochfrequenzdaten; und ein Verfahren zum Bestimmen der Parameter des Erfassungsfensters umfasst:

die Größe des Erfassungsfensters wird gemäß einer zweidimensionalen Zeitskala und von Frequenzen bestimmt, die zum einmaligen Durchführen einer Hochfrequenzprobedatenerfassung mit den Hochfrequenzleistungserfassungsgegenständen abgedeckt werden müssen;

der potenzielle Konfigurationsbereich des Erfassungsfensters wird gemäß einem Positionssatz des Erfassungsfensters bestimmt, der äquivalente Hochfrequenzprobedaten erhalten kann; und

der Erfassungsmodus der Hochfrequenzdaten ist einer von zwei folgenden Modi: die Messung wird durch einmaliges Durchführen der Hochfrequenzprobedatenerfassung vervollständigt und die Messung wird durch mehrmaliges Durchführen der Hochfrequenzprobedatenerfassung vervollständigt.

3. Verfahren nach Anspruch 2, bei dem das Bestimmen, durch die Hochfrequenzerfassungssteuereinheit, der Parameter eines verminderten Leistungsfensters des Sendekanals, der mit dem Erfassungsfenster interferiert, gemäß den Parametern des Erfassungsfensters umfasst: Bestimmen der Größe des verminderten Leistungsfensters, Bestimmen des potenziellen Konfigurationsbereichs des verminderten Leistungsfensters und Bestimmen eines Öffnungsmodus des verminderten Leistungsfensters;

ein Verfahren zum Bestimmen der Größe des verminderten Leistungsfensters umfasst: Bestimmen eines Zeitintervalls, das durch das verminderte Leistungsfenster so abgedeckt ist, dass es gleich oder größer als ein(em) Zeitintervall ist, das durch das Erfassungsfenster abgedeckt ist; und Bestimmen einer Breite eines Teilfrequenzbands, das sich auf einem Frequenzband befindet, das durch den Sendekanal belegt ist und dessen Sendeleistung eine Interferenzstärke erzeugt, die größer ist als eine vorgegebene Schwelle innerhalb des Erfassungsfensters, als die Größe des verminderten Leistungsfensters;

ein Verfahren zum Bestimmen des potenziellen Konfigurationsbereichs des verminderten Leistungsfensters umfasst: Verwenden eines Zeitintervalls in dem potenziellen Konfigurationsbereich des Erfassungsfensters als potenziellen Zeitbereich des verminderten Leistungsfensters; und Verwenden eines Änderungsbereichs, der durch eine Frequenzskala des verminderten Leistungsfensters zugelassen wird, als der potenzielle Konfigurationsbereich des verminderten Leistungsfensters; und

ein Verfahren zum Bestimmen des Öffnungsmodus des verminderten Leistungsfensters umfasst: für einen Modus des einmaligen Durchführens der Hochfrequenzprobedatenerfassung ein einmaliges Öffnen des verminderten Leistungsfensters auf einem Frequenzband, bei dem der Sendekanal in einem Messereignis vorliegt; und für einen Modus des mehrmaligen Durchführens der Hochfrequenzprobedatenerfassung ein mehrmaliges Öffnen des verminderten Leistungsfensters auf einem Frequenzband, bei dem der Sendekanal in einem Messereignis vorliegt.

4. Verfahren nach Anspruch 3, bei dem das Senden der vermindertes Leistungsfenster-Anfrage zu der Ablaufsteuereinheit, zu welcher der Sendekanal gehört, der mit dem Erfassungsfenster interferiert, umfasst:

Senden, durch die Hochfrequenzerfassungssteuereinheit, einer vermindertes Leistungsfenster-Anfrage zu der Ablaufsteuereinheit, zu welcher der Sendekanal, der mit dem Erfassungsfenster interferiert, gehört, durch einen Aufwärtsstrecke-Funkkanal eines Funkendgeräts, zu dem die Hochfrequenzerfassungssteuereinheit gehört, oder Senden, durch die Hochfrequenzerfassungssteuereinheit, der vermindertes Leistungsfenster-Anfrage durch einen Netzwerknebenkanal zwischen der Hochfrequenzerfassungssteuereinheit und der Ablaufsteuereinheit, zu welcher der Sendekanal, der mit dem Erfassungsfenster interferiert, gehört; und

die vermindertes Leistungsfenster-Anfrage weist die Parameter des verminderten Leistungsfensters auf.

5. Verfahren nach Anspruch 4, bei dem die vermindertes Leistungsfenster-Anfrage ferner Prioritätsinformationen aufweist, wobei die Prioritätsinformationen so ausgebildet sind, dass sie angeben, dass: die Ablaufsteuereinheit gezwungen wird, das verminderte Leistungsfenster auf dem Sendekanal zu öffnen; oder die Ablaufsteuereinheit gemäß den gegenwärtigen Dienstbedingungen bestimmt, ob das verminderte Leistungsfenster auf dem Sendekanal geöffnet werden soll.

6. Verfahren nach Anspruch 5, bei dem gemäß der Differenz der Prioritätsinformationen das Senden der Bestätigungsinformationen der vermindertes Leistungsfenster-Anfrage zu der Hochfrequenzerfassungssteuereinheit durch die Ablaufsteuereinheit umfasst:

wenn die Prioritätsinformationen angeben, dass die Ablaufsteuereinheit gezwungen wird, das verminderte Leistungsfenster auf dem Sendekanal zu öffnen, Öffnen, durch die Ablaufsteuereinheit, des verminderten Leistungsfensters auf dem Sendekanal, das durch die Ablaufsteuereinheit gemäß den Informationen gesteuert wird, die in die vermindertes Leistungsfenster-Anfrage einbezogen sind, und Senden, durch die Ablaufsteuereinheit, der Bestätigungsinformationen der vermindertes Leistungsfenster-Anfrage zu der Hochfrequenzerfassungssteuereinheit;

wenn die Prioritätsinformationen angeben, dass die Ablaufsteuereinheit gemäß den gegenwärtigen Dienstbedingungen bestimmt, ob das verminderte Leistungsfenster auf dem Sendekanal geöffnet werden soll, Bestimmen, durch die Ablaufsteuereinheit, ob Ressourcen, die eine Anforderung bezüglich Leerlaufzeitfrequenzressourcen des Sendekanals erfüllen, der durch die Ablaufeinheit gesteuert wird, oder nicht verfügbare Zeitfrequenzressourcen gemäß einer verminderten Leistungsfensterskala und einem potenziellen Konfigurationsbereich, der in die vermindertes Leistungsfenster-Anfrage einbezogen ist, vorliegen, wenn keine Ressourcen vorliegen, welche die Anforderung erfüllen, Bestimmen, durch die Ablaufsteuereinheit, ob Ressourcen, die durch das verminderte Leistungsfenster benötigt werden, durch die Verminderung der Datenübertragungsgeschwindigkeit einiger Nutzer oder durch Unterbrechen der Datenübertragung einiger Nutzer für eine kurze Zeit zur Verfügung gestellt werden können; und wenn die Ressourcen, die durch das verminderte Leistungsfenster benötigt werden, die Anforderung erfüllen, Senden, durch die Ablaufsteuereinheit, der Bestätigungsinformationen des verminderten Leistungsfensters zu der Hochfrequenzerfassungssteuereinheit; ansonsten Senden, durch die Ablaufsteuereinheit, von Informationen, die das Öffnen des verminderten Leistungsfensters zurückweisen.

7. Verfahren nach Anspruch 1, bei dem, wenn die Ablaufsteuereinheit auf einer Netzwerkseite, gemäß der vermindertes Leistungsfenster-Anfrage der Hochfrequenzerfassungssteuereinheit auf einer Endgerätseite, das verminderte Leistungsfenster auf einem benachbarten Kanal eines Aufwärtsstreckenkanals für die Hochfrequenzerfassungsausführungseinheit öffnet, Aufwärtsstreckenresourcen innerhalb eines Zeitintervalls und eines Frequenzintervalls, in dem das verminderte Leistungsfenster erscheint, nicht für ein Endgerät konfiguriert sind, zu dem die Hochfrequenzerfassungssteuereinheit gehört; und Aufwärtsstreckenresourcen innerhalb des Zeitintervalls und des Frequenzintervalls, in dem das verminderte Leistungsfenster erscheint, nicht auf einem ersten Leerlauffrequenzband für weitere Endgeräte konfiguriert sind, die durch die Ablaufsteuereinheit gesteuert werden; und Senden, durch die Ablaufsteuereinheit, der Bestätigungsinformationen des verminderten Leistungsfensters zu der Hochfrequenzerfassungssteuereinheit mittels eines Empfangskanals einer Sende-Empfang-Einheit, und Steuern, durch die Hochfrequenzerfassungssteuereinheit, der Hochfrequenzausführungseinheit zum Vervollständigen von vorgesehenen Hochfrequenzleistungserfassungsgegenständen in dem entsprechenden Erfassungsfenster gemäß den Bestätigungsinformationen des verminderten Leistungsfensters von der Ablaufsteuereinrichtung.

8. Verfahren zur Bestimmung einer maximalen Sendeleistung eines Sendekanals in Echtzeit, umfassend:

Bestimmen, auf dem benachbarten Kanal des Sendekanals, eines Messfensters einer Verlustleistung des Sendekanals auf dem benachbarten Kanal gemäß dem Hochfrequenzleistungserfassungsverfahren nach Anspruch 1, Messen der Verlustleistung P(acl) des Sendekanals auf dem benachbarten Kanal und Erhalten einer Sendeleistung P(t) des Sendekanals, wenn die Verlustleistung auf dem benachbarten Kanal erzeugt wird;
Berechnen eines Verhältnisses K einer Interferenzleistung P(Rauschen), das durch den benachbarten Kanal zugelassen wird, zu der Verlustleistung P(acl) des Sendekanals auf dem benachbarten Kanal; und
Bestimmen eines Produkts aus der Sendeleistung P(t) des Sendekanals und dem Verhältnis K als die maximale Sendeleistung des Sendekanals.

9. Vorrichtung zur Hochfrequenzleistungserfassung, umfassend:

eine Hochfrequenzerfassungssteuereinheit (400), die ausgebildet ist zum: Bestimmen von Parametern eines Erfassungsfensters gemäß Hochfrequenzleistungserfassungsgegenständen, wobei die Hochfrequenzleistungserfassungsgegenstände einen oder mehrere der folgenden Hochfrequenzleistungserfassungsgegenstände umfassen:

Messung einer Signalleistung auf einem benachbarten Kanal;
Messung eines Leerlaufzeitschlitzes auf einem benachbarten Kanal;
Messung einer Außerbandverlustleistung für ein Signal auf einem benachbarten Kanal;
Messung einer Außerbandverlustleistung für einen Sendekanal; und
Messung einer maximalen Sendeleistung für einen Sendekanal;

Bestimmen von Parametern eines verminderten Leistungsfensters eines Sendekanals, der mit dem Erfassungsfenster interferiert, gemäß den Parametern des Erfassungsfensters; und Senden einer vermindertes Leistungsfenster-Anfrage zu einer Sende-Empfang-Einheit; eine Sende-Empfang-Einheit (301a und 301b), die zum Steuern des Erzeugens des verminderten Leistungsfensters auf dem Sendekanal der Sende-Empfang-Einheit gemäß der Anfrage einer Hochfrequenzerfassungssteuereinheit ausgebildet ist;

wobei die Hochfrequenzerfassungssteuereinheit (400) ferner ausgebildet ist zum: Bestimmen von Parametern eines neu geöffneten Erfassungsfensters gemäß den Parametern des verminderten Leistungsfensters in Bestätigungsinformationen der vermindertes Leistungsfenster-Anfrage; und Steuern einer Hochfrequenzerfassungsausführungseinheit;

eine Hochfrequenzerfassungsausführungseinheit (403a und 403b), die unter der Steuerung der Hochfrequenzerfassungssteuereinheit ausgebildet ist zum Vervollständigen der entsprechenden Hochfrequenzleistungserfassungsgegenstände innerhalb des neu geöffneten Erfassungsfensters auf dem benachbarten Kanal des Sendekanals, der durch die Sende-Empfangs-Einheit gesteuert wird, oder auf dem benachbarten Kanal und dem Sendekanal; und

eine Schnittstelleneinheit (303a und 303b), die für eine Datenübertragung zwischen der Sende-Empfang-Einheit und einer Netzwerkseite sowie für eine Messsteuerung und eine Messdatenübertragung zwischen der Hochfrequenzerfassungssteuereinheit sowie der Hochfrequenzerfassungsausführungseinheit und der Netzwerkseite ausgebildet ist.

10. Vorrichtung nach Anspruch 9, ferner umfassend: eine Ablaufsteuereinheit (302), die sich in der Sende-Empfang-Einheit oder auf der Netzwerkseite befindet und ausgebildet ist zum: Empfangen der vermindertes Leistungsfenster-Anfrage, die durch die Hochfrequenzerfassungssteuereinheit gesendet worden ist, Bestimmen der Parameter des verminderten Leistungsfensters gemäß den Parametern des Erfassungsfensters, die durch die Hochfrequenzerfassungssteuereinheit bereitgestellt worden sind, und Senden der Bestätigungsinformationen des verminderten Leistungsfensters zu der Hochfrequenzerfassungssteuereinheit; wobei die Bestätigungsinformationen des verminderten Leistungsfensters die Parameter des verminderten Leistungsfensters umfassen.

11. Vorrichtung nach Anspruch 9, bei der die Hochfrequenzerfassungsausführungseinheit (403a und 403b) umfasst:

einen einstellbaren Bandpassfilter (401), der zum Durchführen eines Bandpassfilters von Hochfrequenzerfassungssignalen, die von einer Antenneneinheit empfangen werden, unter der Steuerung der Hochfrequenzerfassungssteuereinheit ausgebildet ist;

einen Hochfrequenzleistungsabschwächer/koppler (405), der zum Durchführen, unter der Steuerung der Hochfrequenzerfassungssteuereinheit, einer Hochfrequenzsignalleistungsabschwächung mit Hochfrequenzerfassungssignalen, die durch den einstellbaren Bandpassfilter ausgegeben werden, ausgebildet ist; wobei die abgeschwächten Hochfrequenzsignale in eine Empfangskanalverarbeitungseinheit eingespeist werden;

wobei die Empfangskanalverarbeitungseinheit (402) zum Durchführen, unter der Steuerung der Hochfrequenzerfassungssteuereinheit, einer rauscharmen Verstärkung und einer Frequenzumwandlungsverarbeitung der Hochfrequenzsignale auf einem Sendekanal und/oder einem benachbarten Kanal eines Sendekanals ausgebildet ist;

eine Parameterabschätz- und Signaldemodulationseinheit (407), die zum Durchführen, unter der Steuerung der Hochfrequenzerfassungssteuereinheit, einer Parameterabschätzung und/oder einer Signaldemodulation mit Signalen von der Empfangskanalverarbeitungseinheit ausgebildet ist; und

eine Messdatenspeichereinheit (408), die zum Speichern eines Messergebnisses der Parameterabschätz- und Signaldemodulationseinheit ausgebildet ist.

12. System zur Hochfrequenzleistungserfassung, umfassend:

einen Funkzugangspunkt (300a) und ein Funkendgerät (300b), die auf der Basis der Hochfrequenzleistungserfassungsvorrichtung nach Anspruch 9 realisiert worden sind; und eine benachbartes Frequenzband-Messverwaltungseinheit (500), die sich auf der Netzwerkseite befindet und zum Durchführen einer Verwaltung mit den Hochfrequenzleistungserfassungsgegenständen ausgebildet ist, die durch die Hochfrequenzerfassungsausführungseinheit in dem Funkzugangspunkt und/oder die Hochfrequenzerfassungsausführungseinheit in dem Funkendgerät ausgeführt werden müssen; wobei Inhalte der Verwaltung eines oder mehrere der Folgenden umfassen:

Senden von vorhergehenden Informationen des benachbarten Kanals des Sendekanals des Funkzugangspunkts und/oder des Funkendgeräts zu der Hochfrequenzerfassungssteuereinheit des Funkzugangspunkts und/oder des Funkendgeräts; Senden von Erfassungsgegenstandsauslöseinformationen zu der Hochfrequenzerfassungssteuereinheit des Funkzugangspunkts und/oder des Funkendgeräts; und Empfangen eines Messergebnisses von der Hochfrequenzerfassungssteuereinheit des Funkzugangspunkts und/oder des Funkendgeräts.

## Revendications

1. Procédé de détection de puissance de radiofréquence, comprenant :

la détermination (S101), par une unité de commande de détection de radiofréquence, de paramètres d'une fenêtre de détection selon des éléments de détection de puissance de radiofréquence ; dans lequel les éléments de détection de puissance de radiofréquence comprennent un ou plusieurs des éléments de détection de puissance de radiofréquence suivants :

la mesure d'un signal de puissance sur un canal adjacent ;
la mesure d'un créneau temporel inactif sur un canal adjacent ;
la mesure d'une puissance de fuite hors bande pour un signal sur un canal adjacent ;
la mesure d'une puissance de fuite hors bande pour un canal émetteur; et
la mesure d'une puissance émettrice maximale pour un canal émetteur;

la détermination (S102), par l'unité de commande de détection de radiofréquence, de paramètres d'une fenêtre de puissance réduite du canal émetteur interférant avec la fenêtre de détection selon les paramètres de la fenêtre de détection ;
la transmission (S103), par l'unité de commande de détection de radiofréquence, d'une demande de fenêtre de puissance réduite à une unité d'ordonnanceur à laquelle appartient le canal émetteur interférant avec la fenêtre de détection ;
la transmission (S104), par l'unité d'ordonnanceur, d'informations d'accusé de réception de la demande de fenêtre de puissance réduite à l'unité de commande de détection de radiofréquence ; et
le fait de déterminer (S105), par l'unité de commande de détection de radiofréquence, si la demande de fenêtre de puissance réduite est confirmée selon les informations d'accusé de réception de la demande de fenêtre de puissance réduite renvoyées par l'unité d'ordonnanceur; si la demande de fenêtre de puissance réduite est confirmée, l'unité de commande de détection de radiofréquence détermine (S106) des paramètres d'une fenêtre de détection nouvellement ouverte selon les paramètres de la fenêtre de puissance réduite renvoyés par l'unité d'ordonnanceur, et commande une unité d'exécution de détection de radiofréquence pour compléter des éléments de détection de puissance de radiofréquence correspondants dans la fenêtre de détection nouvellement ouverte, dans lequel la fenêtre de détection nouvellement ouverte est sur le canal adjacent du canal émetteur ou sur le canal adjacent et le canal émetteur; sinon, l'unité de commande de détection de radiofréquence arrête (S107) l'exécution des éléments de détection de puissance de radiofréquence.

2. Procédé selon la revendication 1, dans lequel les paramètres de la fenêtre de détection comprennent : une taille de la fenêtre de détection, une plage de configuration candidate de la fenêtre de détection et un mode d'acquisition de données de radiofréquence ; et un procédé de détermination des paramètres de la fenêtre de détection comprend :

la taille de la fenêtre de détection est déterminée selon une échelle bidimensionnelle de temps et des fréquences devant être couvertes pour réaliser une acquisition de données d'échantillon de radiofréquence une fois sur les éléments de détection de puissance de radiofréquence ;
la plage de configuration candidate de la fenêtre de détection est déterminée selon un ensemble d'emplacements de la fenêtre de détection qui est capable d'obtenir des données d'échantillon de radiofréquence équivalentes ; et
le mode d'acquisition des données de radiofréquence est l'un des deux modes suivants : mesure accomplie en réalisant l'acquisition de données d'échantillon de radiofréquence une fois et mesure accomplie en réalisant l'acquisition de données d'échantillon de radiofréquence à de multiples reprises.

3. Procédé selon la revendication 2, dans lequel la détermination, par l'unité de commande de détection de radiofréquence, des paramètres de la fenêtre de puissance réduite du canal émetteur interférant avec la fenêtre de détection selon les paramètres de la fenêtre de détection comprend : la détermination de la taille de la fenêtre de puissance réduite, la détermination de la plage de configuration candidate de la fenêtre de puissance réduite, et la détermination pour un mode d'ouverture de la fenêtre de puissance réduite ;

un procédé de détermination de la taille de la fenêtre de puissance réduite comprend : la détermination d'un intervalle de temps couvert par la fenêtre de puissance réduite comme étant supérieur ou égal à un intervalle de temps couvert par la fenêtre de détection ; et la détermination d'une largeur d'une sous-bande de fréquence, qui est située sur une bande de fréquence occupée par le canal émetteur et dont la puissance d'émission génère une intensité d'interférence supérieure à un seuil prédéterminé au sein de la fenêtre de détection, en tant que taille de la fenêtre de puissance réduite ;

un procédé de détermination de la plage de configuration candidate de la fenêtre de puissance réduite comprend : l'adoption d'un intervalle de temps dans la plage de configuration candidate de la fenêtre de détection en tant que plage de temps candidate de la fenêtre de puissance réduite ; et l'adoption d'une plage de changement autorisée par une échelle de fréquence de la fenêtre de puissance réduite en tant que plage de configuration candidate de la fenêtre de puissance réduite ; et

un procédé de détermination du mode d'ouverture de la fenêtre de puissance réduite comprend : pour un mode de réalisation de l'acquisition de données d'échantillon de radiofréquence une fois, l'ouverture de la fenêtre de puissance réduite une fois seulement sur une bande de fréquence où le canal émetteur se situe dans un événement de mesure ; et pour un mode de réalisation de l'acquisition de données d'échantillon de radiofréquence à de multiples reprises, l'ouverture de la fenêtre de puissance réduite à de multiples reprises sur une bande de fréquence où le canal émetteur se situe dans un événement de mesure.

4.  Procédé selon la revendication 3, dans lequel la transmission de la demande de fenêtre de puissance réduite à l'unité d'ordonnanceur à laquelle appartient le canal émetteur interférant avec la fenêtre de détection comprend :

    la transmission, par l'unité de commande de détection de radiofréquence, de la demande de fenêtre de puissance réduite à l'unité d'ordonnanceur à laquelle appartient le canal émetteur interférant avec la fenêtre de détection par le biais d'un canal radio de liaison montante d'un terminal radio auquel appartient l'unité de commande de détection de radiofréquence, ou la transmission, par l'unité de commande de détection de radiofréquence, de la demande de fenêtre de puissance réduite par le biais d'un canal côté réseau entre l'unité de commande de détection de radiofréquence et l'unité d'ordonnanceur à laquelle appartient le canal émetteur interférant avec la fenêtre de détection ; et
    la demande de fenêtre de puissance réduite achemine les paramètres de la fenêtre de puissance réduite.

5.  Procédé selon la revendication 4, dans lequel la demande de fenêtre de puissance réduite achemine en outre des informations de priorité, dans lequel les informations de priorité sont configurées pour indiquer que : l'unité d'ordonnanceur est forcée d'ouvrir la fenêtre de puissance réduite sur le canal émetteur; ou l'unité d'ordonnanceur détermine s'il faut ouvrir la fenêtre de puissance réduite sur le canal émetteur selon des conditions de service actuelles.

6.  Procédé selon la revendication 5, dans lequel, selon une différence des informations de priorité, la transmission des informations d'accusé de réception de la demande de fenêtre de puissance réduite à l'unité de commande de détection de radiofréquence par l'unité d'ordonnanceur comprend :

    lorsque les informations de priorité indiquent que l'unité d'ordonnanceur est forcée d'ouvrir la fenêtre de puissance réduite sur le canal émetteur, l'ouverture, par l'unité d'ordonnanceur, de la fenêtre de puissance réduite sur le canal émetteur commandé par l'unité d'ordonnanceur selon les informations incluses dans la demande de fenêtre de puissance réduite, et la transmission, par l'unité d'ordonnanceur, des informations d'accusé de réception de la demande de fenêtre de puissance réduite à l'unité de commande de détection de radiofréquence ;
    lorsque les informations de priorité indiquent que l'unité d'ordonnanceur détermine s'il faut ouvrir la fenêtre de puissance réduite sur le canal émetteur selon les conditions de service actuelles, le fait de déterminer, par l'unité d'ordonnanceur, s'il y a des ressources qui satisfont une exigence dans des ressources de fréquence de temps inactif détenues par le canal émetteur commandé par l'unité d'ordonnanceur ou des ressources de fréquence de temps indisponibles selon une échelle de fenêtre de puissance réduite et une plage de configuration candidate incluse dans la demande de fenêtre de puissance réduite, lorsqu'il n'y a pas de ressources qui satisfont l'exigence, le fait de déterminer, par l'unité d'ordonnanceur, si des ressources dont a besoin la fenêtre de puissance réduite peuvent être fournies en réduisant un débit de transmission de données de certains utilisateurs ou en interrompant une transmission de données de certains utilisateurs pendant un court instant ; et lorsque les ressources dont a besoin la fenêtre de puissance réduite satisfont l'exigence, la transmission, par l'unité d'ordonnanceur, des informations d'accusé de réception de la fenêtre de puissance réduite à l'unité de commande de détection de radiofréquence ; sinon, la transmission, par l'unité d'ordonnanceur, d'informations de refus d'ouverture de la fenêtre de puissance réduite.

7. Procédé selon la revendication 1, dans lequel lorsque l'unité d'ordonnanceur d'un côté réseau s'ouvre, selon la demande de fenêtre de puissance réduite de l'unité de commande de détection de radiofréquence d'un côté terminal, la fenêtre de puissance réduite sur un canal adjacent d'un canal de liaison montante pour l'unité d'exécution de détection de radiofréquence, des ressources de liaison montante ne sont pas configurées pour un terminal auquel appartient l'unité de commande de détection de radiofréquence dans un intervalle de temps et un intervalle de fréquence dans lesquels apparaît la fenêtre de puissance réduite ; et des ressources de liaison montantes ne sont pas configurées sur une première bande de fréquence inactive pour d'autres terminaux commandés par l'unité d'ordonnanceur dans l'intervalle de temps et l'intervalle de fréquence dans lesquels apparaît la fenêtre de puissance réduite ; et la transmission, par l'unité d'ordonnanceur, des informations d'accusé de réception de la fenêtre de puissance réduite à l'unité de commande de détection de radiofréquence via un canal récepteur d'une unité d'émetteur-récepteur, et la commande, par l'unité de commande de détection de radiofréquence, de l'unité d'exécution de détection de radiofréquence pour compléter des éléments de détection de puissance de radiofréquence désignés dans la fenêtre de détection correspondante selon les informations d'accusé de réception de la fenêtre de puissance réduite depuis l'ordonnanceur.

8. Procédé de détermination d'une puissance d'émission maximale d'un canal émetteur en temps réel, comprenant :

la détermination, sur le canal adjacent du canal émetteur, d'une fenêtre de mesure d'une puissance de fuite du canal émetteur sur le canal adjacent selon le procédé de détection de puissance de radiofréquence selon la revendication 1, la mesure de la puissance de fuite $P(acl)$ du canal émetteur sur le canal adjacent, et l'obtention d'une puissance d'émission $P(t)$ du canal émetteur lorsque la puissance de fuite est générée sur le canal adjacent ;

le calcul d'un rapport $K$ entre une puissance d'interférence $P(bruit)$ autorisée par le canal adjacent et la puissance de fuite $P(acl)$ du canal émetteur sur le canal adjacent ; et

la détermination d'un produit de la puissance d'émission $P(t)$ du canal émetteur et du rapport $K$ en tant que puissance d'émission maximale du canal émetteur.

9. Dispositif de détection de puissance de radiofréquence, comprenant :

une unité de commande de détection de radiofréquence (400) configurée pour : déterminer des paramètres d'une fenêtre de détection selon des éléments de détection de puissance de radiofréquence, dans lequel les éléments de détection de puissance de radiofréquence comprennent un ou plusieurs des éléments de détection de puissance de radiofréquence suivants :

la mesure d'un signal de puissance sur un canal adjacent ;
la mesure d'un créneau temporel inactif sur un canal adjacent ;
la mesure d'une puissance de fuite hors bande pour un signal sur un canal adjacent ;
la mesure d'une puissance de fuite hors bande pour un canal émetteur; et
la mesure d'une puissance émettrice maximale pour un canal émetteur;

déterminer des paramètres d'une fenêtre de puissance réduite d'un canal émetteur interférant avec la fenêtre de détection selon les paramètres de la fenêtre de détection ; et transmettre une demande de fenêtre de puissance réduite à une unité d'émetteur-récepteur;
une unité d'émetteur-récepteur (301a et 301b) configurée pour commander la génération de la fenêtre de puissance réduite sur le canal émetteur de l'unité d'émetteur-récepteur selon la demande d'une unité de commande de détection de radiofréquence ;
l'unité de commande de détection de radiofréquence (400) est en outre configurée pour : déterminer des paramètres d'une fenêtre de détection nouvellement ouverte selon les paramètres de la fenêtre de puissance réduite dans des informations d'accusé de réception de la demande de fenêtre de puissance réduite ; et commander une unité d'exécution de détection de radiofréquence ;
une unité d'exécution de détection de radiofréquence (403a et 403b) configurée pour, sous la commande de l'unité de commande de détection de radiofréquence, accomplir une détection de puissance de radiofréquence des éléments de détection de puissance de radiofréquence correspondants au sein de la fenêtre de détection nouvellement ouverte sur le canal adjacent du canal émetteur commandé par l'unité d'émetteur-récepteur ou sur le canal adjacent et le canal émetteur; et

une unité d'interface (303a et 303b) configurée pour transmettre des données entre l'unité d'émetteur-récepteur et un côté réseau, et commander une mesure et transmettre des données de mesure entre l'unité de commande de détection de radiofréquence ainsi que l'unité d'exécution de détection de radiofréquence et le côté réseau.

10. Dispositif selon la revendication 9, comprenant en outre :

une unité d'ordonnanceur (302) située dans l'unité d'émetteur-récepteur ou du côté réseau et configurée pour : recevoir la demande de fenêtre de puissance réduite envoyée par l'unité de commande de détection de radiofréquence, déterminer les paramètres de la fenêtre de puissance réduite selon les paramètres de la fenêtre de détection fournie par l'unité de commande de détection radio et transmettre les informations d'accusé de réception de la fenêtre de puissance réduite à l'unité de commande de détection de radiofréquence ; dans lequel les informations d'accusé de réception de la fenêtre de puissance réduite comprennent les paramètres de la fenêtre de puissance réduite.

11. Dispositif selon la revendication 9, dans lequel l'unité d'exécution de détection de radiofréquence (403a, 403b) comprend :

un filtre passe-bande ajustable (401) configuré pour réaliser un filtrage passe-bande sur des signaux de détection de radiofréquence reçus en provenance d'une unité d'antenne sous la commande de l'unité de commande de détection de radiofréquence ;

un atténuateur/coupleur de puissance de radiofréquence (405) configuré pour réaliser, sous la commande de l'unité de commande de détection de radiofréquence, une atténuation de puissance de signal de radiofréquence sur des signaux de détection de radiofréquence fournis en sortie par le filtre passe-bande ajustable ; dans lequel les signaux de radiofréquence atténués sont entrés dans une unité de traitement de canal récepteur ;

l'unité de traitement de canal récepteur (402) configurée pour réaliser, sous la commande de l'unité de commande de détection de radiofréquence, une amplification à faible bruit et un traitement de conversion de fréquence sur les signaux de radiofréquence sur un canal émetteur et/ou sur un canal adjacent d'un canal émetteur; une unité de démodulation de signal et d'estimation de paramètre (407) configurée pour réaliser, sous la commande de l'unité de commande de détection de radiofréquence, une estimation de paramètre et/ou une démodulation de signal sur des signaux provenant de l'unité de traitement de canal récepteur ; et

une unité de stockage de données de mesure (408) configurée pour stocker un résultat de mesure de l'unité de démodulation de signal et d'estimation de paramètre.

12. Système de détection de puissance de radiofréquence, comprenant :

un point d'accès radio (300a) et un terminal radio (300b) réalisés d'après le dispositif de détection de puissance de radio fréquence selon la revendication 9 ; et

une unité de gestion de mesure de bande de fréquence adjacente (500) située du côté réseau et configurée pour réaliser une gestion sur les éléments de détection de puissance de radiofréquence qui doivent être exécutés par l'unité d'exécution de détection de radiofréquence dans le point d'accès radio et/ou l'unité d'exécution de détection de radiofréquence dans le terminal radio ; les contenus de la gestion comprennent un ou plusieurs de ce qui suit :

la transmission d'informations antérieures du canal adjacent du canal émetteur du point d'accès radio et/ou du terminal radio à l'unité de commande de détection de radiofréquence du point d'accès radio et/ou du terminal radio ;

la transmission d'informations de déclenchement d'élément de détection à l'unité de commande de détection de radiofréquence du point d'accès radio et/ou du terminal radio ; et

la réception d'un résultat de mesure en provenance de l'unité de commande de détection de radiofréquence du point d'accès radio et/ou du terminal radio.

Fig. 1

within a first time interval, a radio frequency detection control unit determines parameters of a detection window according to measurement items ⟶ S101

within a second time interval, the ratio frequency detection control unit determines parameters of a reduced power window of a transmitting channel interfering with the detection window according to the parameters of the detection window ⟶ S102

within a third time interval, the radio frequency detection control unit transmits a reduced power window request to a scheduler to which the transmitting channel interfering with the detection window belongs ⟶ S103

within a fourth time interval, the scheduler to which the transmitting channel interfering with the detection window belongs transmits acknowledgement information of the reduced power window request to the radio frequency detection control unit ⟶ S104

within a fifth time interval, the radio frequency detection control unit determines whether the reduced power window request is confirmed ⟶ S105

No

S107 — the radio frequency detection control unit stops execution of the radio frequency detection items

Yes

within a sixth time interval, the radio frequency detection control unit determines the position of the detection window according to received position parameters of the reduced power window and completes the corresponding radio frequency detection items within the detection window ⟶ S106

Fig. 2a

Fig. 2b

Fig. 2c

Fig. 3a

Fig. 3b

Radio terminal 300b        300b        Signal on a transmitting channel

303b        403b        304

Radio frequency detection execution unit

Radio frequency detection control unit        400

Interface unit

BBU        LRU

Transceiver unit        305b

301b

Existing signal on an adjacent channel

302

Reduced power window request/ acknowledgement

Scheduler unit

Fig. 4

406        400        Receive radio frequency detection management signals

Radio frequency detection control unit

Measurement data storage unit

Radio frequency power attenuator/ coupler

405

408        Parameter estimation and signal demodulation unit

Receiving channel processing unit

401        404        402        407

Report a measurement result

Radio frequency detection execution unit 403

403

Fig. 5

Radio terminal with a radio
frequency detection unit 300b  300b

Signal on a
transmitting channel

303b  403b  304b

Radio frequency detection
execution unit

Existing signal
on an adjacent
channel

Radio frequency
detection control unit  400b

Interface unit

BBU  RRU

Transceiver unit  305b

301b

Microcell radio access point 501

501

The microcell radio access
point includes one of the
following devices:
1) an indoor microcell AP; and
2) an outdoor microcell AP

500

Adjacent
frequency band
measurement
management unit

Radio access point with a
radio frequency detection
execution unit 300a

Signal on a
transmitting channel

300a

303a  403a  304a

Radio frequency detection
execution unit

Existing signal
on an adjacent
channel

BBU

Radio frequency
detection control unit

Interface unit

400a  302a

Scheduler unit

RRU

305a

Measurement
coordination

Transceiver unit

301a

Fig. 6a

First idle frequency band serving as an
operating frequency band of an LTE
TDD system

470MHz

790MHz

BW1 BW0 BW2

Frequency

First adjacent
frequency

Second adjacent
frequency

Fig. 6b

Television broadcasting
channel on a first
adjacent frequency band

300a Signals transmitted by a
radio access point on a
first idle frequency band

Signals transmitted by a
radio terminal on the first
idle frequency band

Television broadcasting
channel on a second
adjacent frequency band

Signals of the radio
access point on an
adjacent frequency
band of the first idle
frequency band

Location A

Signals transmitted by the
radio terminal on an
adjacent frequency band of
the first idle frequency band

300b

Location B

501

Outdoor hotspot
coverage

Macro-cell covered by an
allowable frequency band used
by the radio access point

Fig. 7

Bandwidth of an
existing channel

Guard band needed
when signals on the
existing channel are
relatively weak

Bandwidth of a new
channel on an idle
frequency band B2

215

GB1

B2
201

205

GB2

202

203

201r

203r

203l

201l

2031

f3

f2

f1

Frequency

210

Out-of-band leak power within an adjacent
television broadcasting channel

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200610011235
- US 20080075059 A1
- CN 200610152441
- US 20090197590 A1
- WO 2009064582 A2